# EUROPEAN PATENT SPECIFICATION

(11) **EP 3 543 298 B1**
(45) Date of publication and mention of the grant of the patent: **26.07.2023**
(21) Application number: 19164077.0
(22) Date of filing: 20.03.2019
(51) Int. Cl.: C09D 11/38, C09D 11/322, C09D 11/54, C09D 11/40

(54) **PIGMENT PRINTING INK JET INK COMPOSITION, INK SET FOR PIGMENT PRINTING, AND INK JET RECORDING METHOD**
PIGMENTDRUCKTINTENSTRAHLTINTENZUSAMMENSETZUNG, TINTENSATZ FÜR DEN PIGMENTDRUCK UND TINTENSTRAHLAUFZEICHNUNGSVERFAHREN
COMPOSITION D'ENCRE POUR JET D'ENCRE D'IMPRESSION DE PIGMENT, JEU D'ENCRE POUR IMPRESSION DE PIGMENT ET PROCÉDÉ D'IMPRESSION À JET D'ENCRE

(30) Priority: 20.03.2018 JP 2018052347
(43) Date of publication of application: 25.09.2019
(73) Proprietor: Seiko Epson Corporation, Tokyo 160-8801 (JP)
(72) Inventor: OHASHI, Masakazu, Suwa-shi, Nagano 392-8502 (JP); CHIDATE, Kosuke, Suwa-shi, Nagano 392-8502 (JP); MIYABAYASHI, Toshiyuki, Suwa-shi, Nagano 392-8502 (JP)
(74) Representative: Miller Sturt Kenyon

(56) References cited:
- EP-A2- 0 943 666
- JP-A- H1 046 079
- US-A1- 2006 197 814
- US-A1- 2013 169 724
- US-A1- 2013 202 862
- US-B1- 6 184 268

## Description

### BACKGROUND

### 1. Technical Field

The present invention relates to a pigment printing ink jet ink composition, an ink set for pigment printing, and an inkjet recording method.

### 2. Related Art

Using an ink jet recording method, printing for dyeing a cloth and the like is performed. Examples of printing methods and processes are described in US 2013/169724; US 2006/197814; US 6 184 268; US 2013/202862; and EP 0 943 666. An example of a pigment ink is JP H10 46079. In the related art, as a recording method with respect to a cloth such as a woven fabric and a non-woven fabric, a screen printing method, a roller printing method, and the like can be used. However, from a viewpoint of various kinds of small quantity productivity and immediate printability, it is advantageous to apply the ink jet recording method, and thus various examinations are performed.

In printing using the ink jet recording method, an ink composition (hereinafter, referred to as "ink") is mixed with a pigment and a fixing resin to perform printing on a cloth, and pigment printing is also examined (for example, JP-A-2017-51952).

### SUMMARY

An advantage of some aspects of the invention is that in such a pigment printing ink jet ink composition and an inkjet recording method using the pigment printing inkjet ink composition, further improvement of color developing properties is sought.

According to an aspect of the invention, there is provided a pigment printing ink jet ink composition as set out in the appended claims.

According to another aspect of the invention, there is provided an ink set for pigment printing as set out in the appended claims.

According to still another aspect of the invention, there is provided an ink jet recording method of performing inkjet printing as set out in the appended claims.

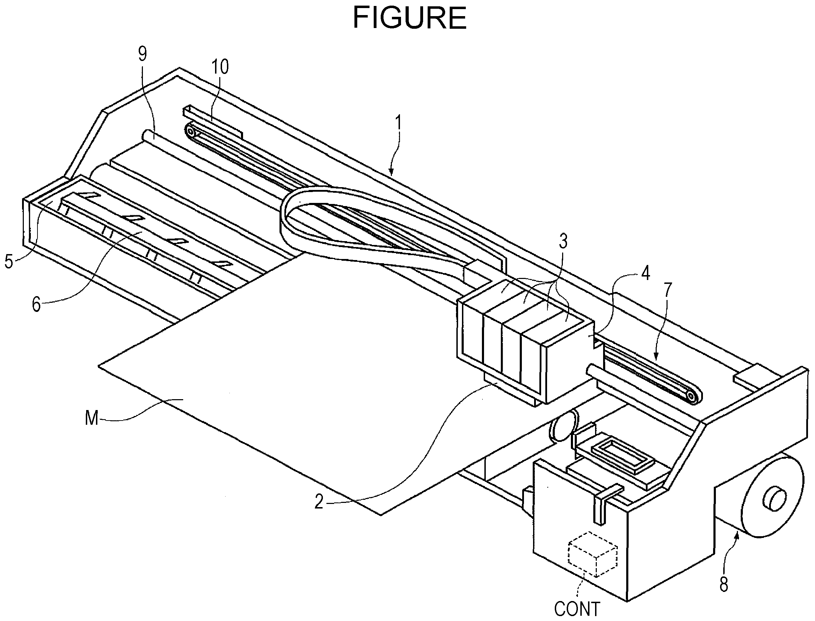

### BRIEF DESCRIPTION OF THE DRAWING

The invention will be described with reference to the accompanying drawing, wherein like numbers reference like elements.

Figure is an overall perspective view of a printing apparatus performing an ink jet recording method according to the invention.

### DESCRIPTION OF EXEMPLARY EMBODIMENTS

Hereinafter, some embodiments of the invention will be described. The embodiments to be described below are examples of the invention. The invention is not limited to any of the embodiments to be described, and also includes various modifications performed within a range not changing the spirit of the invention. Not all the configurations described below are essential configurations of the invention.

According to an aspect of a pigment printing ink jet ink composition according to this embodiment, the pigment printing ink jet ink composition includes a pigment, a resin particle, a sulfonate-based anionic surfactant, and water.

According to another aspect of an ink set for pigment printing according to this embodiment, the ink set for pigment printing includes a processing liquid composition that includes a cationic compound and water and the pigment printing ink jet ink composition according to this embodiment.

In addition, according to still another aspect of an ink jet recording method according to this embodiment, in a processing liquid composition including a cationic compound and water and a method performing inkjet printing by using the pigment printing inkjet ink composition according to the embodiment, the processing liquid composition is ejected from an inkjet head and attached to a region to which the processing liquid composition is attached.

Hereinafter, the pigment printing ink jet ink composition, the ink set for pigment printing, and the ink jet recording method according to this embodiment will be described in detail in an order of a configuration of an executable printing apparatus, the pigment printing ink jet ink composition (hereinafter, also referred to as "pigment printing ink", "ink composition", and "ink"), a processing liquid composition constituting the ink set for pigment printing along with the pigment printing ink jet ink composition (hereinafter, also referred to as "processing liquid"), a cloth for performing the inkjet recording method, and the ink jet recording method.

### 1. Printing Apparatus

First, an example of a printing apparatus used in this embodiment will be described referring to the drawing. The printing apparatus used in this embodiment is not limited to the following aspect.

In addition, the printing apparatus used in this embodiment will be described by exemplifying an on-carriage type printer in which an ink cartridge is installed in a carriage. The printing apparatus is not limited to the on-carriage type printer. The printing apparatus may be an off-carriage type printer in which an ink cartridge is fixed outside, not being installed in a carriage.

The printer used in the following description is a serial printer in which a print head is installed in a carriage moving in a predetermined direction, and the head moves in accordance with the movement of the carriage to eject liquid droplets on a recording media. The printing apparatus used in the invention is not limited to the serial printer. The printing apparatus may be a line printer in which a head is formed wider than a width of a recording medium and the print head ejects liquid droplets on the recording medium without moving.

In each drawing used in the following description, a size of each member is appropriately changed in order to enlarge the member into a recognizable size.

Examples of the printing apparatus include an ink jet type printer (hereinafter, referred to as "printer") in which an inkjet head shown in Figure is installed. As shown in Figure, a printer 1 includes a carriage 4 in which an ink jet head 2 is installed and an ink cartridge 3 is detachably mounted, a platen 5 which is provided under the inkjet head 2 and to which a cloth M that is a recording medium is transported, a heating mechanism 6 for heating the cloth M, a carriage moving mechanism 7 which moves the carriage 4 in a medium width direction of the cloth M, and a medium feeding mechanism 8 that transports the cloth M in a medium feeding direction. In addition, the printer 1 includes a control device CONT that controls operation of the whole printer 1. The medium width direction indicates a main scanning direction (hereinafter, head scanning direction). The medium feeding direction indicates a sub-scanning direction (direction perpendicular to the main scanning direction).

The ink jet head 2 is a unit that attaches an ink or a processing liquid onto the cloth M, and includes a plurality of nozzles (not shown) through which an ink is ejected, on a surface opposing the cloth M onto which the ink is attached. The plurality of nozzles is disposed in a line form, and with this, a nozzle face is formed on a nozzle plate surface.

Examples of a method of ejecting an ink from a nozzle include a method of applying a strong electric field between a nozzle and an acceleration electrode in front of the nozzle, continuously ejecting a liquid droplet-like ink from the nozzle, and ejecting the ink corresponding to a recording information signal while the liquid droplets of the ink fly between deflecting electrodes (electrostatic attraction method); a method of forcefully ejecting liquid droplets of an ink by applying a pressure to a processing liquid with a small pump, and mechanically vibrating a nozzle with a crystal vibrator and the like; a method of simultaneously applying a pressure and a recording information signal to an ink with a piezoelectric element, and ejecting and recording liquid droplets of the ink (piezo method); a method of heating and foaming an ink with a minute electrode in accordance with a recording information signal, and ejecting and recording liquid droplets of the ink (thermal jet method), and the like.

As the ink jet head 2, any of a line type ink jet head and a serial type ink jet head is usable, but in this embodiment, the serial type inkjet head is used.

Here, the printing apparatus including a serial type inkjet head performs recording by performing scanning (pass) of ejecting an ink while relatively moving a recording ink jet head with respect to a recording medium a plurality of times. Specific examples of the serial type ink jet head include those in which an inkjet head is installed in a carriage moving in a width direction of a recording medium (direction intersecting transporting direction of recording medium), and the inkjet head moves in accordance with the movement of the carriage to eject liquid droplets on the recording medium.

On the other hand, a printing apparatus including the line type ink jet head performs recording by performing scanning (pass) one time while relatively moving an inkjet head with respect to a recording medium. Specific examples of the line type ink jet head include those in which an ink jet head is formed wider than a width of a recording medium and the ink jet head ejects liquid droplets on the recording medium without moving.

The ink cartridge 3 that supplies an ink to the ink jet head 2 includes four independent cartridges. Each of the four cartridges is filled with each of different kinds of inks, for example. The ink cartridge 3 is detachably mounted with respect to the ink jet head 2. In the example of Figure, the number of the cartridges is 4 but not limited thereto and it is possible to install a desired number of the cartridges.

The carriage 4 is mounted in a state of being supported by a guide rod 9 which is a support member provided in the main scanning direction. In addition, the carriage 4 moves in the main scanning direction along with the guide rod 9 by the carriage moving mechanism 7. Although the example of Figure shows that the carriage 4 moves in the main scanning direction, the carriage 4 is not limited thereto, and may move in the sub-scanning direction.

An installation position of the heating mechanism 6 is not particularly limited as long as the heating mechanism 6 is provided at a position capable of heating the cloth M. In the example of Figure, the heating mechanism 6 is provided at a position opposing the ink jet head 2, on the platen 5. With this, if the heating mechanism 6 is provided at a position opposing the ink jet head 2, it is possible to reliably heat a position at which liquid droplets are attached onto the cloth M, and thus it is possible to effectively dry the liquid droplets attached onto the cloth M.

As the heating mechanism 6, for example, a print heater mechanism of heating the cloth M by bringing the cloth M into contact with a heat source, a mechanism of emitting infrared rays or a microwave (electromagnetic wave with a maximum wavelength of about 2,450 MHz), a dryer mechanism of spraying hot air, and the like can be used.

Heating of the cloth M by the heating mechanism 6 is performed before or at the time when liquid droplets ejected from the nozzle of the ink jet head 2 are attached onto the cloth M. All conditions of heating (for example, timing for performing heating, heating temperature, heating time, and the like) are controlled by the control device CONT.

Heating of the cloth M by the heating mechanism 6 is performed such that the cloth M maintains a temperature range of equal to or more than 35°C and equal to or less than 65°C, from a viewpoint of improvement in spreading, permeability, and dryness of an ink, ejection stability, and the like. Here, the temperature of heating the cloth M means a temperature of a surface of the cloth M on which recording is performed at the time of heating.

The printer 1 may further include a second heating mechanism (not shown) in addition to the heating mechanism 6. In this case, the second heating mechanism is provided on a downstream side in the transporting direction of the cloth M from the heating mechanism 6. The second heating mechanism performs heating of the cloth M after the cloth M is heated by the heating mechanism 6, that is, after liquid droplets ejected from the nozzle are attached onto the cloth M. With this, dryness of the liquid droplets of the ink attached onto the cloth M is improved. As the second heating mechanism, any mechanism described as the heating mechanism 6, for example, the dryer mechanism, a heat press machine, and the like can be used. It is preferable that heating by the second heating mechanism be performed such that the cloth M maintains a temperature range of equal to or more than 100°C and equal to or less than 200°C.

A linear encoder 10 detects a position of the carriage 4 in the main scanning direction with a signal. The detected signal is sent to the control device CONT as position information. The control device CONT recognizes a scanning position of the ink jet head 2 based on the position information from the linear encoder 10, and controls recording operation (ejecting operation) and the like by the ink jet head 2. In addition, the control device CONT is configured to change and control a movement speed of the carriage 4.

### 2. Pigment Printing Ink Jet Ink Composition

The pigment printing inkjet ink composition according to this embodiment includes a pigment, a resin particle, a sulfonate-based anionic surfactant, and water.

Hereinafter, the pigment printing inkjet ink composition according to this embodiment will be described.

### 2.1. Pigment

The pigment printing inkjet ink composition according to this embodiment includes a pigment. As the pigment is attached onto the cloth, printing is performed on the cloth, and thereby it is possible to obtain a printed matter (printed product).

As the pigment, either of an organic pigment and an inorganic pigment can be used, and a pigment having any color can be also used. In a case of using either pigment, it is possible to obtain a printed matter having excellent color developing properties. In this embodiment, it is preferable that the pigment be a pigment dispersed in a sulfonate-based anionic surfactant to be described later. As the pigment is dispersed in the sulfonate-based anionic surfactant, the ink has excellent color developing properties and also excellent print reliability and storage stability.

Although not limited to the following, examples of a white pigment include a white inorganic pigment such as titanium oxide, zinc oxide, zinc sulfide, antimony oxide, and zirconium oxide, and the like. In addition to the white inorganic pigment, it is also possible to use a white organic pigment such as white hollow resin particle and polymer particle.

Although not limited to the following, examples of a color index (C.I.) of the white pigment include C.I. pigment white 1 (basic lead carbonate), 4 (zinc oxide), 5 (compound of zinc sulfide and barium sulfate), 6 (titanium oxide), 6:1 (titanium oxide including other metal oxide), 7 (zinc sulfide), 18 (calcium carbonate), 19 (clay), 20 (mica titanium), 21 (barium sulfate), 22 (natural barium sulfate), 23 (gloss white), 24 (alumina white), 25 (plaster), 26 (magnesium oxide/silicon oxide), 27 (silica), 28 (anhydrous calcium silicate), and the like. Among these, as the white pigment, titanium oxide is preferable since titanium oxide provides excellent color developing properties, concealability, and visibility (brightness) and obtains a favorable dispersion particle diameter.

Among the titanium oxide, a general rutile type titanium oxide is preferable as the white pigment. The rutile type titanium oxide may be produced by itself or may be commercially available. Examples of an industrial production method in a case where the rutile type titanium oxide (powder form) is produced by itself include a sulfuric acid method and a chloride method in the related art. Examples of a commercially available product of the rutile type titanium oxide include rutile types of Tipaque (registered trademark) CR-60-2, CR-67, R-980, R-780, R-850, R-980, R-630, R-670, and PF-736 (hereinabove, trade name, manufactured by Ishihara Industries).

Examples of a chromatic color pigment include pigments excluding the white pigment. Although the chromatic color pigment is not limited to the following, as the pigment other than the white pigment, organic pigments such as azo-based pigment, phthalocyanine-based pigment, dye-based pigment, condensed polycyclic pigment, nitro-based pigment, and nitrosobased pigment (Brilliant Carmine 6B, Lake Red C, Watching Red, Disazo Yellow, Hansa Yellow, Phthalocyanine Blue, Phthalocyanine Green, Alkali Blue, Aniline Black, and the like), metals such as cobalt, iron, chrome, copper, zinc, lead, titanium, vanadium, manganese, and nickel, metal oxide and sulfide, carbon blacks such as furnace carbon black, lamp black, acetylene black, and channel black (C.I. pigment black 7), and inorganic pigments such as yellow soil, ultramarine blue, and dark blue can be used.

More specifically, examples of the carbon black used as a black pigment include No. 2300, No. 900, MCF88, No. 33, No. 40, No. 45, No. 52, MA7, MA8, MA100, No. 2200B, and the like (hereinabove, trade name, manufactured by Mitsubishi Chemical Corporation), Raven 5750, Raven 5250, Raven 5000, Raven 3500, Raven 1255, Raven 700, and the like (hereinabove, trade name, manufactured by Columbia Carbon Corporation), Regal 400R, Regal 330R, Regal 660R, Mogul L, Monarch 700, Monarch 800, Monarch 880, Monarch 900, Monarch 1000, Monarch 1100, Monarch 1300, Monarch 1400, and the like (hereinabove, trade name, manufactured by Cabot Corporation), Color Black FW1, Color Black FW2, Color Black FW2V, Color Black FW18, Color Black FW200, Color Black S150, Color Black S160, Color Black S170, Printex 35, Printex U, Printex V, Printex 140U, Special Black 6, Special Black 5, Special Black 4A, Special Black 4 (hereinabove, trade name, manufactured by Degussa Corporation), and the like.

Examples of the yellow pigment include C.I. Pigment Yellow 1, 2, 3, 4, 5, 6, 7, 10, 11, 12, 13, 14, 16, 17, 24, 34, 35, 37, 53, 55, 65, 73, 74, 75, 81, 83, 93, 94, 95, 97, 98, 99, 108, 109, 110, 113, 114, 117, 120, 124, 128, 129, 133, 138, 139, 147, 151, 153, 154, 167, 172, 180, and the like.

Examples of a magenta pigment include C.I. Red Pigment 1, 2, 3, 4, 5, 6, 7, 8, 9, 10, 11, 12, 14, 15, 16, 17, 18, 19, 21, 22, 23, 30, 31, 32, 37, 38, 40, 41, 42, 48 (Ca), 48 (Mn), 57 (Ca), 57:1, 88, 112, 114, 122, 123, 144, 146, 149, 150, 166, 168, 170, 171, 175, 176, 177, 178, 179, 184, 185, 187, 202, 209, 219, 224, 245, and C.I. Pigment Violet 19, 23, 32, 33, 36 38, 43, 50, and the like.

Examples of the cyanine pigment include C.I. Pigment Blue 1, 2, 3, 15, 15:1, 15:2, 15;3, 15:34, 15:4, 16, 18, 22, 25, 60, 65, 66, and C.I. Vat Blue 4, 60, and the like.

Examples of the pigment other than black, yellow, magenta, and cyanine include C.I. Pigment Green 7, 10, C.I. Pigment Brown 3, 5, 25, 26, C.I. Pigment Orange 1, 2, 5, 7, 13, 14, 15, 16, 24, 34, 36, 38, 40, 43, 63, and the like.

One of the pigments described above may be used alone, and two or more thereof may be used in combination.

A content of the pigment included in the pigment printing ink jet ink composition according to this embodiment varies depending on the kind of the pigment used, but from a viewpoint of ensuring favorable color developing properties, the content thereof is preferably equal to or more than 1% by mass, more preferably equal to or more than 3% by mass or more, and further more preferably equal to or more than 4% by mass or more, with respect to 100% by mass which is a total mass of the ink. In addition, the content of the pigment is preferably equal to or less than 30% by mass, more preferably equal to or more than 15% by mass, and further more preferably equal to or more than 12% by mass.

### 2.2. Sulfonate-based Anionic Surfactant

The pigment printing inkjet ink composition according to this embodiment uses a sulfonate-based anionic surfactant as a dispersing agent for dispersing the pigment.

The present inventors newly found that if permeability into a cloth is excessively high, the pigment printing ink tends to be poor in color developing properties since the ink is sunk inside, and this tendency is remarkable in a case where a resin dispersing agent is used as a dispersing agent of the pigment. Here, the inventors found that by dispersing the pigment in a surfactant by using the sulfonate-based anionic surfactant which is a kind of low-molecular dispersing agent, not the resin dispersing agent, it is possible to suppress permeation into the cloth and to make color development favorable.

In this embodiment, examples of the sulfonate-based anionic surfactant include various known sulfonate-based anionic surfactant such as alkyl sulfonate, alkyl sulfocarboxylate, α-olefin sulfonate, alkylphenyl sulfonate, alkylphenyl ether sulfonate, alkyldiphenyl ether sulfonate, alkylaryl sulfonate, alkyl benzene sulfonate, alkyl naphthalene sulfonate, alkylphenol sulfonate, alkyltetraline sulfonate, dialkyl sulfosuccinate, alkylether sulfonate, naphthalene sulfonate, sulfosuccinic acid diester salt, sulfosuccinic acid ester salt, acylated methyltaurine salt, and acylated taurine salt, formalin condensate of naphthalene sulfonate, formalin condensate of sodium alkylnaphthalene sulfonate and sodium naphthalene sulfonate such as butyl naphthalene, formalin condensate of sodium cresol sulfonate and sodium 2-naphthol-6-sulfonate, formalin condensate of sodium cresol sulfonate, formalin condensate of sodium creosote oil sulfonate, and the like. One of the sulfonate-based anionic surfactants can be used alone or two or more thereof can be used in combination.

In the pigment printing ink jet ink composition according to this embodiment, as a dispersing agent of the pigment, by using a sulfonate-based anionic surfactant not a resin dispersing agent, the ink has excellent dispersibility, and has excellent storage stability and color developing properties. In addition, by using the sulfonate-based anionic surfactant as a dispersing agent of the pigment, it is possible to suppress rise of a viscosity of the ink and increase the content of a moisturizing agent to be described later. In addition, in a pigment printing ink, since a resin having a low film-forming temperature is used so as to secure the texture of the printed cloth, the ink is easily solidified and the clogging of the nozzle easily occurs. In this embodiment, by using a low-molecular sulfonate-based anionic surfactant, compared to the resin, as a dispersing agent of the pigment, the ink hardly gets dried and the clogging is prevented, and thus the ink has excellent ejection stability.

In this embodiment, as the sulfonate-based anionic surfactant, dialkyl sulfosuccinate such as dioctyl sulfosuccinate sodium salt, dioctyl sulfosuccinate potassium salt, di-2-ethylhexyl sodium sulfosuccinate, didodecyl sulfosuccinate sodium salt, didodecyl sulfosuccinate potassium salt, dihexadecyl sulfosuccinate sodium salt, and dihexadecyl succinate sodium salt is preferably used. In addition, the sulfonate-based anionic surfactant is preferably a sulfosuccinate including an alkyl group having 6 to 22 carbon atoms, and more preferably a sulfosuccinate including an alkyl group having 8 to 18 carbon atoms. By using the sulfosuccinate as a dispersing agent of the pigment, it is possible to suppress permeation of the pigment into the cloth and to make color development favorable.

A content of the sulfonate-based anionic surfactant is preferably equal to or more than 0.1% by mass, more preferably equal to or more than 0.2% by mass, further more preferably equal to or more than 0.3% by mass, and particularly preferably equal to or more than 0.5% by mass, with respect to a total mass of the ink composition. In addition, the content of the sulfonate-based anionic surfactant is preferably equal to or less than 2% by mass, more preferably equal to or less than 1.5% by mass, and further more preferably equal to or less than 1% by mass. If the content of the sulfonate-based anionic surfactant is within the range, it is possible to further suppress permeation of the pigment ink into the cloth and make color development favorable. In addition, it is possible to enhance dispersibility of the ink and the viscosity of the ink and to ensure the ink has excellent print reliability and storage stability.

### 2.3. Resin Particle

The pigment printing inkjet ink composition according to this embodiment includes a resin particle. The resin particle has a function of improving fixability of an image formed by the ink composition by forming a resin film due to heating after recording, and also can improve washing solidity and friction fastness of the image. As the resin particle, any one in an emulsion state or a solution state can be used. However, from a viewpoint of suppressing rise in a viscosity of the ink, a resin particle in the emulsion state is preferably used.

As the resin of the resin particle, an acrylate-based resin, a styrene acrylate-based resin, a fluorene-based resin, a urethane-based resin, a polyolefin-based resin, a rosin-modified resin, a terpene-based resin, a polyester-based resin, a polyamide-based resin, an epoxy-based resin, a vinyl chloride resin, a vinyl chloride-vinyl acetate copolymer, a vinyl ethylene acetate-based resin, and the like can be used. One of these resins may be used alone or two or more thereof may be used in combination.

As the resin of the resin particle, among these, at least one selected from the urethane-based resin and the acrylate-based resin is preferably used since the design flexibility is high and thus desired physical properties are easily obtained, and from a viewpoint of securing the texture of the cloth and making the friction fastness favorable, the urethane-based resin is more preferably used. In addition, the urethane-based resin may be any urethane-based resin such as a polyester-based urethane-based resin including an ether bond, a polyester-based urethane resin including an ester bond, and a polycarbonate-based urethane resin including a carbonate bond. In a case of cross-linking the urethane-based resin having a cross-linking group, a degree of elongation at a rupture point, 100% modulus, or the like of the cross-linking body can be adjusted by changing density of a cross-linking point and the kind of such a main chain. Among these, the urethane-based resin including a cross-linking group having a polycarbonate skeleton or a polyester skeleton has a favorable balance between the degree of elongation at a rupture point and the 100% modulus, and is more preferable from a viewpoint of easily improving the friction fastness of an image and the texture of a printed matter. In addition, the polycarbonate-based urethane resin having a polycarbonate skeleton is preferable since the polycarbonate-based urethane resin having a polycarbonate skeleton tends to be able to make the friction fastness favorable. In this embodiment, in a case where a resin dispersing agent is not used, a total resin amount in the ink composition is decreased and thereby the friction fastness deteriorates in some cases. However, by using the urethane-based resin having a cross-linking group, particularly the polycarbonate-based urethane resin having a cross-linking group, it is possible to make the friction fastness favorable.

As the urethane resin, a polycarbonate-based urethane resin, and a urethane resin including a cross-linking group are preferably included. Examples of the cross-linking group include an isocyanate group or a silanol group, and a blocked isocyanate group in which the isocyanate group is chemically protected, namely, capped or blocked is preferably used. The blocked isocyanate group is activated by being de-protected due to application of heat, and forms a bond, for example, a urethane bond, a urea bond, an allophanate bond, and the like.

In addition, the cross-linking group of the urethane-based resin including a cross-linking group is preferably provided by three per one molecule, and in such a case, due to reaction of the cross-linking group, a cross-linking structure is formed. The urethane-based resin in the present specification indicates a resin which is formed when an isocyanate group reacts with other reactive groups, for example, a hydroxyl group, an amino group, a urethane bond group, a carboxyl group, and the like, and has a urethane bond, a urea bond, an allophanate bond, and the like. Therefore, in the specification, for example, the urea resin is included in the urethane-based resin. The urethane-based resin is preferably a compound having a urethane bond obtained by reacting a compound including an isocyanate group with a compound including a hydroxyl group.

The blocked isocyanate includes a latent isocyanate group obtained by blocking the isocyanate group with a blocking agent, and can be obtained by reacting a polyisocyanate compound with a blocking agent, for example.

Examples of the polyisocyanate compound include a polyisocyanate monomer, a polyisocyanate derivative, and the like. Examples of the polyisocyanate monomer include a polyisocyanate such as aromatic polyisocyanate, aromatic aliphatic polyisocyanate, aliphatic polyisocyanate, and alicyclic polyisocyanate, and the like. One of the polyisocyanate monomers can be used alone or two or more thereof can be used in combination.

Examples of the polyisocyanate derivative include an allophanate-modified body such as allophanate-modified body generated by reacting the polyisocyanate monomer with a low-molecular polyol to be described later, for example, a polymer and a dimer of the polyisocyanate monomer, an isocyanurate-modified body, and a trimer, a pentamer, and a septamer of an iminooxadiazinedione-modified body, a polymol-modified body such as polyolmodified body (alcohol adduct) generated by reacting the polyisocyanate monomer with a low-molecular polyol to be described later, a biuret-modified body such as a biuret-modified body generated by reacting the polyisocyanate monomer with water or amines, a urea-modified body such as urea-modified body generated by reacting the polyisocyanate monomer with a diamine, an oxadiazinetriol-modified body such as oxadiazinetriol generated by reacting the polyisocyanate monomer and carbonic acid gas, a carbodiimide-modified body such as carbodiimide-modified body generated by decarboxylation condensation reaction of the polyisocyanate monomer, a uretodione-modified body, a uretonimine-modified body, and the like.

In a case where two or more of the polyisocyanate compounds are used in combination, for example, at the time of producing a blocked isocyanate, two or more polyisocyanate compounds may be simultaneously reacted, and a blocked isocyanate obtained by separately using each of the polyisocyanate compounds may be mixed with each other.

The blocking agent blocks and inactivates an isocyanate group, and on the other hand, regenerates or activates the isocyanate group after deblocking. In addition, the blocking agent also has a catalytic action of activating the isocyanate group in a blocked state and in a deblocked state.

Examples of the blocking agent include an imidazole-based compound, an imidazoline-based compound, a pyrimidine-based compound, a guanidine-based compound, an alcohol-based compound, a phenol-based compound, an active methylene-based compound, an amine-based compound, an imine-based compound, an oxime-based compound, a carbamic acid-based compound, a urea-based compound, an acid amide-based (lactam-based) compound, an acid imide-based compound, a triazole-based compound, a pyrazole-based compound, a mercaptan-based compound, bisulfate, and the like.

The blocking agent will be exemplified in detail below. For the exemplified compounds, dissociation temperatures are also described as a temperature of regenerating an isocyanate group.

Examples of the imidazole-based compound include imidazole (dissociation temperature 100°C), benzimidazole (dissociation temperature 120°C), 2-methylimidazole (dissociation temperature 70°C), 4-methylimidazole (dissociation temperature 100°C), 2-ethylimidazole (dissociation temperature 70°C), 2-isopropylimidazole, 2,4-dimethylimidazole, 2-ethyl-4-methylimidazole, and the like.

Examples of the imidazoline-based compound include 2-methylimidazoline (dissociation temperature 110°C), 2-phenylimidazole, and the like.

Examples of the pyrimidine-based compound include 2-methyl-1,4,5,6-tetrahydropyrimidine, and the like.

Examples of the guanidine-based compound include 3,3-dialkylguanidine such as 3,3-dimethylguanidine, for example, 1,1,3,3-tetraalkylguanidine such as 1,1,3,3-tetramethylguanidine (dissociation temperature 120°C), 1,5,7-triazabicyclo[4.4.0]deca-5-en, and the like.

Examples of the alcohol-based compound include methanol, ethanol, 2-propanol, n-butanol, s-butanol, 2-ethylhexyl alcohol, 1-or 2-octanol, cyclohexyl alcohol, ethylene glycol, benzyl alcohol, 2,2,2-trifluoroethanol, 2,2,2-trichloroethanol, 2-(hydroxymethyl)furan, 2-methoxyethanol, methoxypropanol, 2-ethoxyethanol, n-propoxyethanol, 2-butoxyethanol, 2-ethoxyethoxyethanol, 2-ethoxybutoxyethanol, butoxyethoxyethanol, 2-butoxyethylethanol, 2-butoxyethoxyethanol, N,N-dibutyl-2-hydroxyacetoamide, N-hydroxysuccinimide, N-morpholine ethanol, 2,2-dimethyl-1,3-dioxsolane-4-methanol, 3-oxazolidine ethanol, 2-hydroxymethyl pyridine (dissociation temperature 140°C), furfuryl alcohol, 12-hydroxy stearic acid, triphenyl silanol, methacrylic acid 2-hydroxy ethyl, and the like.

Examples of the phenol-based compound include phenol, cresol, ethyl phenol, n-propyl phenol, isopropyl phenol, n-butyl phenol, s-butyl phenol, t-butyl phenol, n-hexyl phenol, 2-ethylhexyl phenol, n-octyl phenol, n-nonyl phenol, di-n-propyl phenol, diisopropyl phenol, isopropyl cresol, di-n-butyl phenol, di-s-butyl phenol, di-t-butylphenol, di-n-octyl phenol, di-2-ethylhexyl phenol, di-n-nonyl phenol, nitrophenol, bromophenol, chlorophenol, fluorophenol, dimethyl phenol, styrenated phenol, methyl salicylate, 4-hydroxybenzonate methyl, 4-hydroxybenzonate benzyl, hydroxybenzonate 2-ethylhexyl, 4-[(dimethylamino)methyl]phenol, 4-[(dimethylamino)methyl]-nonylphenol, bis(4-hydroxy phenol)acetate, 2-hydroxypyridine (dissociation temperature 80°C), 2-or 8-hydroxyquinoline, 2-chloro-3-pyridinol, pyridine-2-thiol (dissociation temperature 70°C), and the like.

Examples of the active methylene-based compound include Meldrum's acid, for example, dialkyl malonate such as dimethyl malonate, diethyl malonate, di-n-butyl malonate, di-t-butyl malonate, di-2-ethylhexyl malonate, methyl-n-butyl malonate, ethyl-n-butyl malonate, methyl-s-butyl malonate, ethyl-s-butyl malonate, methyl-t-butyl malonate, ethyl-t-butyl malonate, diethyl methylmalonate, dibenzyl malonate, diphenyl malonate, benzylmethyl malonate, ethylphenyl malonate, t-butylphenyl malonate, and isopropylidene malonate, for example, alkyl acetoacetate such as methyl acetoacetate, ethyl acetoacetate, n-propyl acetoacetate, isopropyl acetoacetate, n-butyl acetoacetate, t-butyl acetoacetate, benzyl acetoacetate, and phenyl acetoacetate, for example, 2-acetoacetoxyethyl methacrylate, acetyl acetone, ethyl cyanoacetate, and the like.

Examples of the amine-based compound include dibutyl amine, diphenyl amine, aniline, N-methyl aniline, carbazole, bis(2,2,6,6-tetramethyl piperidinyl)amine, di-n-propyl amine, diisopropyl amine (dissociation temperature 130°C), isopropopylethyl amine, 2,2,4-, or, 2,2,5-trimethylhexsamethylene amine, N-isopropylcyclohexyl amine (dissociation temperature 140°C), dicyclohexyl amine (dissociation temperature 130°C), bis(3,5,5-trimethylcyclohexyl)amine, pyridine, 2,6-dimethyl piperidine (dissociation temperature 130°C), t-butylmethyl amine, t-butylethyl amine (dissociation temperature 120°C), t-butylpropyl amine, t-butylbutyl amine, t-butylbenzyl amine (dissociation temperature 120°C), t-butylphenyl amine, 2,2,6-trimethyl piperidine, 2,2,6,6-tetramethyl piperidine (dissociation temperature 80°C), (dimethyl amine)-2,2,6,6-tetramethyl piperidine, 2,2,6,6-tetraemthyl-4-piperidine, 6-methyl-2-piperidine, 6-aminocaproic acid, and the like.

Examples of the imine compound include ethylene imine, polyethylene imine, 1,4,5,6-tetrahydropyrimidine, guanidine, and the like.

Examples of the oxime compound include formaldoxime, acetoaldoxime, acetoxime, methylethyl ketoxime (dissociation temperature 130°C), cyclohexanone oxime, diacetylmonoxime, penzofenoxime, 2,2,6,6-tetramethyl cyclohexanone oxime, diisopropyl ketone oxime, methyl t-butylketone oxime, diisobutyl ketone oxime, methyl isobutyl ketone oxime, methyl isopropyl ketone oxime, methyl 2,4-dimethyl pentyl ketone oxime, methyl 3-ethyl heptyl ketone oxime, methyl isoamyl ketone oxime, n-amyl ketone oxime, 2,2,4,4-tetramethyl-1,3-cyclobutanedione monoxime, 4,4'-dimethoxy benzophenone oxime, 2-heptanone oxime, and the like.

Examples of the carbamic acid-based compound include N-phenyl carbamic acid phenyl and the like.

Examples of the urea-based compound include urea, thiourea, ethylene urea, and the like.

Examples of the acid amide-based (lactam-based) compound include acetanilide, N-methylacetamide, acetic acid amide, ε-caprolactam, δ-valerolactam, γ-butyrolactam, pyrrolidone, 2,5-piperazinedione, laurolactam, and the like.

Examples of the acid amide-based compound include succinimide, maleate imide, phthalimide, and the like.

Examples of the triazole-based compound include 1,2,4-triazole, benzotriazole, and the like.

Examples of the pyrazole-based compound include pyrazole, 3,5-dimethyl pyrazole (dissociation temperature 120°C), 3,5-diisopropyl pyrazole, 3,5-diphenyl pyrazole, 3,5-di-t-butyl pyrazole, 3-methyl pyrazole, 4-benzyl-3,5-dimethyl pyrazole, 4-nitro-3,5-dimethyl pyrazole, 4-buromo-3,5-dimethyl pyrazole, 3-methyl-5-phenyl pyrazole, and the like.

Examples of the mercaptan-based compound include butyl mercaptan, dodecyl mercaptan, hexyl mercaptan, and the like.

Examples of the bisulfite include sodium hydrogensulfite, and the like.

In addition, the blocking agent is not particularly limited, and examples thereof include benzoxazolone, anhydrous isatoic acid, tetrabutyl phosphonium/acetate, and the like.

Such a blocking agent can be used alone, or two or more thereof can be used in combination. A dissociation temperature of the blocking agent can be appropriately selected. For example, the dissociation temperature is equal to or more than 60°C and equal to or less than 230°C, preferably equal to or more than 80°C and equal to or less than 200°C, more preferably equal to or more than 100°C and equal to or less than 180°C, and further more preferably equal to or more than 110°C and equal to or less than 160°C. If the dissociation temperature is within the temperature range, it is possible to sufficiently lengthen the pot life of the pigment printing inkjet ink composition and to prevent a temperature during the heating step from being too high.

In addition, a main chain of the urethane-based resin including a cross-linking group may be any of a polyether type including an ether bond, a polyester type including an ester bond, a polycarbonate type including a carbonate bond, and the like. The degree of elongation at a rupture point, 100% modulus, or the like in a case where the urethane-based resin including a cross-linking group (cross-linking body) can be adjusted by changing density of a cross-linking point and the kind of such a main chain. Among these, the urethane-based resin including a cross-linking group having a polycarbonate skeleton or a polyester skeleton has a favorable balance between the degree of elongation at a rupture point and the 100% modulus, and is more preferable from a viewpoint of easily improving the friction fastness of an image and the texture of a printed matter. In addition, the polycarbonate-based urethane resin having a polycarbonate skeleton is preferable since the polycarbonate-based urethane resin having a polycarbonate skeleton tends to be able to make the friction fastness favorable. In addition, the pigment becomes easily fixed on the cloth surface, and a printed matter with excellent color developing properties and friction fastness is obtained.

In a cross-linking body after cross-linking is formed, the degree of elongation at a rupture point of the urethane-based resin including a cross-linking group is equal to or more than 150%, preferably equal to or more than 170%, more preferably equal to or more than 200%, and further more preferably equal to or more than 300%. By selecting the density of the cross-linking point, the type of the main chain, or the like such that the degree of elongation at a rupture point is within the range, it is possible to improve the texture of the printed matter.

Here, as the degree of elongation at a rupture point, it is possible to employ a value obtained by curing a urethane-based resin emulsion including a cross-linking group, preparing a film having a thickness of approximately 60 µm, and performing measurement in the condition of a tensile test gauge length of 20 mm and a tensile speed of 100 mm/minute. In addition, as the 100% modulus, it is possible to employ a value obtained by measuring a tensile stress when the film in the tensile test is extended by 100% with respect to the original length. The film to be measured may be formed by using the urethane-based resin emulsion including a cross-linking group or may be formed by molding using the same kind of resin. However, it is preferable that the film to be measured is formed by using an emulsion resin.

The urethane-based resin including a cross-linking group may be mixed in an emulsion form. Such a resin emulsion is a so-called self-reactive urethane-based resin emulsion, and it is possible to use a commercially available urethane-based resin emulsion as the urethane-based resin emulsion including an isocyanate group blocked with a blocking agent including a hydrophilic group.

Examples of the commercially available urethane-based resin emulsion include Takelac WS-6021 (trade name, manufactured by Mitsui Chemicals & SKC Polyurethanes Inc., urethane-based resin emulsion, polyether-based polyurethane, having a polyether-derived skeleton), WS-5100 (trade name, manufactured by Mitsui Chemicals & SKC Polyurethanes Inc., urethane-based resin emulsion, polycarbonate-based polyurethane, having a polycarbonatederived skeleton), Elastron E-37, H-3 (hereinabove, polyester-based polyurethane in which the main chain has a polyester-derived skeleton), Elastron H-38, BAP, C-52, F-29, W-11P (hereinabove, polyether-based polyurethane in which the main chain has a polyether-derived skeleton) (trade name, manufactured by DKS Co., Ltd., urethane-based resin emulsion), Superflex 870, 800, 150, 420, 460, 470, 610, 700 (trade name, manufactured by DKS Co., Ltd., urethane-based resin emulsion), Pamarin UA-150 (trade name, manufactured by Sanyo Chemical Industries, urethane-based resin emulsion), Sancure-2710 (trade name, manufactured by Lubrizol Japan Ltd., urethane-based resin emulsion), NeoRez R-9660, R-9637, R-940 (trade name, manufactured by Kusumoto Chemicals Ltd., urethane-based resin emulsion), Adecabon Titer HUX-380, 290K (trade name, manufactured by ADEKA Corporation, urethane-based resin emulsion), and the like.

In this embodiment, a content of the resin particle is preferably equal to or more than 1% by mass, more preferably equal to or more than 2.5% by mass, and further more preferably equal to or more than 3% by mass with respect to a total mass of the ink, in terms of solid portion. In addition, an upper limit value of the content of the resin particle is preferably equal to or less than 20% by mass, more preferably equal to or less than 15% by mass, and further more preferably equal to or less than 12% by mass. As the content of the resin particle is within the range, a printed matter having excellent color developing properties is obtained and the printed matter also has excellent print reliability and storage stability.

In an ink jet recording method in this embodiment to be described later, the resin particle may be included in a processing liquid in a case where the processing liquid is used. In this case, the resin particle included in the processing liquid and the resin particle included in the pigment printing ink jet ink composition may be the same or different.

In addition, a temperature in a heating step in the inkjet recording method in this embodiment to be described later is set such that at least a portion of the cross-linking group is activated, considering a de-protection temperature of an isocyanate group of the urethane-based resin including a cross-linking group, that is, a dissociation temperature.

### 2.4. Water

The pigment printing inkjet ink composition according to this embodiment includes water as a solvent. Water is a main medium of the ink and is a component that evaporates and scatters by drying. Examples of water include water obtained by removing ionic impurities as much as possible, that is, pure water such as ion exchanged water, ultrafiltration water, reverse osmotic water, and distilled water and super pure water. In addition, if water obtained by sterilization by ultraviolet ray emission or addition of hydrogen peroxide is used, it is possible to prevent generation of mold or bacteria in a case where the ink is stored for a long period of time.

The content of water included in the pigment printing inkjet ink composition according to this embodiment is not particularly limited, but the content thereof can be equal to or more than 50% by mass, equal to or more than 60% by mass, and equal to or more than 70% by mass, with respect to a total mass of the ink. In addition, an upper limit of the content of water included in the ink can be equal to or less than 95% by mass, equal to or less than 90% by mass, and equal to or less than 80% by mass.

### 2.5. Moisturizing Agent

The pigment printing inkjet ink composition according to this embodiment preferably includes a moisturizing agent. As the pigment printing ink jet ink composition according to this embodiment includes a moisturizing agent, the pigment printing ink jet ink composition can be produced having excellent print reliability at the time of recording (hereinafter, referred to as "intermittent ejection stability").

In this embodiment, the moisturizing agent used in the pigment printing inkjet ink composition is preferably a water-soluble organic solvent. By using a water-soluble organic solvent, it is possible to obtain an image having excellent print reliability at the time of recording, having favorable drying properties of the ink composition, and excellent color developing properties and friction fastness.

In this embodiment, examples of the organic solvent usable as the moisturizing agent include a polyol compound, a glycol ether, a nitrogen-containing solvent, a betaine compound, and the like.

Examples of the polyol compound include a polyol compound that has 2 to 6 carbon atoms in a molecule and may have one ether bond in a molecule, and preferably include a diol compound. Specifically, examples thereof include glycols such as 1,2-pentanediol, triethylene glycol monomethylethyl, triethylene glycol monobutylethyl, diethylene glycol monobutylethyl, dipropylene glycol monopropylether, glycerine, 1,2-hexanediol, 1,2-heptanediol, 1,3-propanediol, 1,2-butanediol, 1,3-butanediol, 1,4-butanediol, 2,3-butanediol, 2-methyl-3-phenoxy-1,2-propanediol, 3-(3-methylphenoxy)-1,2-propanediol, 3-hesyloxy-1,2-propanediol, 2-hydroxymethyl-2-phenoxymethyl-1,3-propanediol, 3-methyl-1,3-butanediol, 1,3-propanediol, 1,2-butanediol, 1,2-pentanediol, 1,4-butanediol, 1,5-pentanediol, 1,6-hexanediol, 2-methyl-2,4-pentanediol, 3-methyl-1,5-pentanediol, and the like.

The glycol ether is preferably monoalkyl ether of glycol selected from ethylene glycol, diethylene glycol, triethylene glycol, polyethylene glycol, propylene glycol, dipropylene glycol, tripropylene glycol, polypropylene glycol, and polyoxyethylene polyoxypropylene glycol. More preferably, examples thereof include triethylene glycol monomethylethyl, triethylene glycol monobutylethyl, dipropylene glycol monopropyl ether, and the like.

Examples of the nitrogen-containing solvent include N-methyl-2-pyrrolidone, N-ethyl-2-pyrrolidone, N-vinyl-2-pyrrolidone, 2-pyrrolidone, N-butyl-2-pyrrolidone, 5-methyl-2-pyrrolidone, and the like. These can be used alone, or two or more thereof can be used in combination. The nitrogen-containing solvent can operate as a favorable solubilizing agent, so as to obtain an image with excellent friction fastness, whilst preventing clogging of an ink jet head or a nozzle.

As the nitrogen-containing solvent, alkoxy alkylamides can be also exemplified, and examples of the nitrogen-containing solvent include 3-methoxy-N,N-dimethyl propionamide, 3-methoxy-N,N-diethyl propionamide, 3-methoxy-N,N-methylethyl propionamide, 3-ethoxy-N,N-dimethyl propionamide, 3-ethoxy-N,N-diethyl propionamide, 3-ethoxy-N,N-methylethyl propionamide, 3-n-butoxy-N,N-dimethyl propionamide, 3-n-butoxy-N,N-diethyl propionamide, 3-n-butoxy-N,N-methylethyl propionamide, 3-n-propoxy-N,N-dimethyl propionamide, 3-n-propoxy-N,N-diethyl propionamide, 3-n-propoxy-N,N-methylethyl propionamide, 3-iso-propoxy-N,N-dimethyl propionamide, 3-iso-propoxy-N,N-diethyl propionamide, 3-iso-propoxy-N,N-methylethyl propionamide, 3-tert-butoxy-N,N-dimethyl propionamide, 3-tert-butoxy-N,N-diethyl propionamide, 3-tert-butoxy-N,N-methylethyl propionamide, and the like.

The betaine compound is a compound (intramolecular salt) having a positive charge and a negative charge at non-adjacent positions in the same molecule and having no charge as a whole molecule, in which a dissociable hydrogen atom is not bonded to an atom having a positive charge. A preferable betaine compound is an N-alkyl substitute of an amino acid, and a more preferable betaine compound is an N-trialkyl substitute of an amino acid. Examples of the betaine compound include trimethyl glycine (referred to as "glycine betaine"), γ-butyrobetaine, homarine, trigonelline, carnitine, homoserine betaine, valine betaine, lysin betaine, ornithine betaine, alanine betaine, stachidrine, betaine glutamate, and the like, and preferably include trimethyl glycine and the like.

A normal boiling point of the organic solvent used as a moisturizing agent is preferably equal to or more than 200°C, more preferably equal to or more than 220°C, further more preferably equal to or more than 240°C, and particularly preferably equal to or more than 280°C. In addition, the normal boiling point of the organic solvent used as a moisturizing agent is preferably equal to or less than 300°C. In a case where the normal boiling point of the organic solvent is within the range, ejection reliability of the ink composition has been found to be excellent and preferable.

In this embodiment, a high boiling point organic solvent having a normal boiling point of 280°C or more, such as triethylene glycol and glycerine, has a high function as a moisturizing agent, suppresses drying of an ink jet head when included, and stabilizes ejection. In particular, glycerine which is a high boiling point organic solvent exhibits a favorable moisturizing effect. Although there is a case where glycerine remains in a coating film since the boiling point is high, in pigment printing, there is no concern that glycerine remains in a coating film since heating and drying after recording is performed at a high temperature. In particular, although a high boiling point organic solvent tends to raise the ink viscosity, in this embodiment, it is possible to suppress rise of the ink viscosity by using a sulfonate-based anionic surfactant as a dispersing agent of the pigment. Therefore, it is possible to increase the content of the moisturizing agent, to suppress clogging of a nozzle of an ink jet head, and to ensure ejection reliability.

In this embodiment, the moisturizing agent may be used alone, or two or more thereof may be used in combination. In addition, the moisturizing agent is preferably added so as to obtain a desired ink viscosity and surface tension, and a content thereof is preferably equal to or more than 5% by mass, more preferably equal to or more than 10% by mass, and further more preferably equal to or more than 15% by mass, with respect to a total mass of the ink. In addition, the content of the moisturizing agent is preferably equal to or less than 35% by mass, more preferably equal to or less than 30% by mass, and further more preferably equal to or less than 25% by mass, with respect to a total mass of the pigment printing inkjet ink composition.

In particular, in this embodiment, a content of the organic solvent having a normal boiling point of 280°C or more as a moisturizing agent is preferably equal to or more than 5% by mass, more preferably equal to or more than 10% by mass, and further more preferably equal to or more than 15% by mass, with respect to the total mass of the ink. As the content of the high boiling point organic solvent is within the range, it is possible to further ensure ejection reliability.

### 2.6. Inorganic Alkali Compound

The pigment printing inkjet ink composition according to this embodiment preferably includes an inorganic alkali compound (inorganic base compound). The inorganic alkali compound has properties of enhancing a pH of the pigment printing ink jet ink composition. In addition, the inorganic alkali compound enhances dispersion stability of the resin particle, and thus has a function of improving re-dispersibility of the resin particle.

Examples of the inorganic alkali compound include a hydroxide of alkali metal or a hydroxide of alkali earth metal, a carbonate of alkali metal or a carbonate of alkali earth metal, a phosphate of alkali metal or a phosphate of alkali earth metal, and the like.

Examples of the hydroxide of alkali metal include a lithium hydroxide, a sodium hydroxide, a potassium hydroxide, and the like. Examples of the hydroxide of the alkali earth metal include a calcium hydroxide, a magnesium hydroxide, and the like.

Examples of the carbonate of alkali metal include a lithium carbonate, a lithium hydrogen carbonate, a potassium carbonate, a potassium hydrogen carbonate, a sodium carbonate, a sodium hydrogen carbonate, and the like. Examples of the carbonate of alkali earth metal include a calcium carbonate and the like.

Examples of the phosphate of alkali metal include a lithium phosphate, a potassium phosphate, a potassium dihydrogen phosphate, a trisodium phosphate, a disodium hydrogen phosphate, and the like.

As the pigment printing inkjet ink composition according to this embodiment, a plurality of kinds of inorganic alkali compounds exemplified above may be used. A total content of the inorganic alkali compound is preferably equal to or more than 0.01% by mass and equal to or less than 0.8% by mass, more preferably equal to or more than 0.02% by mass and equal to or less than 0.6% by mass, and further more preferably equal to or more than 0.03% by mass and equal to or less than 0.4% by mass, with respect to a total mass of the pigment printing ink jet ink composition.

If a mixture amount of the inorganic alkali compound is within the range, it is possible to sufficiently enhance a pH of the pigment printing inkjet ink composition and to exhibit a function of improving re-dispersibility of the resin particle since dispersion stability of the resin particle is enhanced.

### 2.7. Other Components

The pigment printing inkjet ink composition according to this embodiment may include a surfactant other than the sulfonate-based anionic surfactant, a pH adjusting agent, a preservative/anti-mold agent, a rust preventive agent, a chelating agent, a viscosity adjusting agent, a solubilizing aid, an anti-oxidant, and the like, depending on the necessity.

### Surfactant

The pigment printing inkjet ink composition according to this embodiment may include a surfactant other than the sulfonate-based anionic surfactant in an amount that does not affect the operation of the sulfonate-based anionic surfactant. As the surfactant other than the sulfonate-based anionic surfactant, any of a non-ionic surfactant, a cationic surfactant, and an ampholytic surfactant can be used, and these may be used in combination. These surfactants can enhance permeability into the cloth by deteriorating the surface tension of the ink composition, and on the other hand, there is a case where stability at the time of ejecting an ink from a head is increased.

### pH Adjusting Agent

In addition to the inorganic alkali compound, examples of the pH adjusting agent include amines having a normal boiling point of preferably at least 25°C, and preferably 200°C or more, such as morpholines, piperazines, diethanolamine, triethanolamine, and triisopropanolamine, ammonia, and the like. Among these, amines having a normal boiling point of preferably at least 25°C, and preferably 200°C or more is preferably included. As such a high boiling point amine is included, it is possible to suppress clogging of the head at a temperature of the heating step in the ink jet recording method according to this embodiment to be described later.

### Preservative/Anti-Mold Agent

Examples of the preservative/anti-mold agent include a sodium benzoate, a pentachlorophenol sodium, 2-piridinethiol-1-oxide sodium, sorbic acid sodium, sodium dehydroacetate, 1,2-benzoisothiazolin-3-on (Proxel CRL, Proxel BND, Proxel GXL, Proxel XL-2, Proxel TN of ICI Corporation), and the like.

### Chelating Agent

The chelating agent has properties of capturing ions. Examples of such a chelating agent include an ethylenediamine tetraacetate (EDTA), a nitrilotriacetic acid salt of ethylenediamine, hexametaphosphate, pyrophosphate, metaphosphate, and the like.

### 2.8. Method of Preparing Pigment Printing InkJet Ink Composition

The pigment printing inkjet ink composition according to this embodiment is obtained by mixing the above-described components with one another in an optional order, and removing impurities by performing filtration and the like depending on the necessity. As a method of mixing each component, a method of performing stirring and mixing by sequentially adding materials to a container with a stirring device such as mechanical stirrer and magnetic stirrer is appropriately used. As a filtration method, it is possible to perform centrifugal filtration, filter filtration, and the like, depending on the necessity.

### 2.9. Physical Properties of Pigment Printing Ink Jet Ink Composition

The pigment printing inkjet ink composition according to this embodiment is imparted to the cloth by an ink jet method. For this reason, from a viewpoint of the balance between recording quality and reliability as an ink for ink jet recording, surface tension at 25°C of the pigment printing ink jet ink composition is preferably equal to or more than 10 mN/m and equal to or less than 40 mN/m, and more preferably equal to or more than 25 mN/m and equal to or less than 40 mN/m. The surface tension can be measured by checking the surface tension when a platinum plate is wet with an ink in an environment of 25°C, using an automatic surface tension meter CBVP-Z (trade name, manufactured by Kyowa Interface Science Co., Ltd.), for example.

In addition, from the same viewpoint, a viscosity at 20°C of the pigment printing ink jet ink composition is preferably equal to or more than 2 mPa·s and equal to or less than 15 mPa·s, more preferably equal to or more than 2 mPa·s and equal to or less than 5 mPa·s, and further more preferably equal to or more than 2 mPa·s and equal to or less than 3.6 mPa·s. The viscosity can be measured by measuring a viscosity in an environment of 20°C using a viscoelastic tester MCR-300 (trade name, manufactured by Pysica Corporation), for example. 2.10. Operation/Effect

As described above, the pigment printing ink jet ink composition according to this embodiment includes a pigment, a resin particle, a sulfonate-based anionic surfactant, and water, and thus has favorable color developing properties. In addition, by setting a content of the sulfonate-based anionic surfactant and a content of glycerine which is a moisturizing agent to be within an appropriate range, it is also possible to obtain excellent print reliability and storage stability. In addition, in a case where a urethane resin is used in the ink as the resin particle, it is possible to obtain favorable friction fastness.

### 3. Processing Liquid Composition

The ink set for pigment printing according to this embodiment includes a processing liquid composition including the pigment printing ink jet ink composition, a cationic compound, and water. The processing liquid compound is obtained by the cationic compound aggregating components of the ink composition. Therefore, the processing liquid composition can exhibit excellent color developing properties.

### 3.1. Cationic Compound

Examples of the cationic compound included in such a processing liquid composition include a polyvalent metal salt, an organic acid, a cationic resin, a cationic surfactant, and the like. One of these aggregating agents may be used alone, or two or more thereof may be used in combination. Among these aggregating agents, from a viewpoint of excellent reactivity with the pigment or resin particle included in the ink composition, at least one selected from the polyvalent metal salt and the organic acid is preferably used, and the polyvalent metal salt is more preferably used.

The polyvalent metal salt includes a divalent or higher polyvalent metal ion and a negative ion bonded to the polyvalent metal ion, and is a compound soluble in water. Specific examples of the polyvalent metal ion include a divalent metal ion such as Ca²⁺, Cu²⁺, Ni²⁺, Mg²⁺, Zn²⁺, and Ba²⁺; and a trivalent metal ion such as Al³⁺, Fe³⁺, and Cr³⁺. Examples of the negative ion include Cl⁻, I⁻, Br⁻, So₄²⁻, ClO³⁻, NO³⁻, HCOO⁻, CH₃COO⁻, and the like. Among these polyvalent metal salts, from a viewpoint of stability of the processing liquid and reactivity as an aggregating agent, the calcium salt and the magnesium salt are preferable, and any of a calcium nitrate and a calcium chloride are preferable.

Examples of the organic acid appropriately include a sulfuric acid, a hydrochloric acid, a nitric acid, a phosphoric acid, a polyacrylic acid, an acetic acid, a glycolic acid, a malonic acid, a malic acid, a maleic acid, an ascorbic acid, a succinic acid, a glutaric acid, a fumaric acid, a citric acid, a tartaric acid, a lactic acid, a sulfonic acid, an orthophosphoric acid, a pyrrolidone carboxylic acid, a pyrone carboxylic acid, a pyrrole carboxylic acid, a furan carboxylic acid, a pyridine carboxylic acid, a coumaric acid, a thiophene carboxylic acid, a nicotinic acid, a derivative of a compound thereof, or a salt thereof. The organic acid may be used alone, or two or more thereof may be used in combination.

Examples of the cationic acid include a cationic urethane resin, a cationic olefin resin, a cationic allylamine, and the like.

As the cationic urethane resin, a known one can be appropriately selected and used. As the cationic urethane resin, a commercially available product can be used, and examples thereof include Hydran CP-7010, CP-7020, CP-7030, CP-7040, CP-7050, CP-7060, CP-7610 (trade name, manufactured by DIC Corporation), Superflex 600, 610, 620, 630, 640, 650 (trade name, manufactured by DKS Co., Ltd.), urethane emulsion WBR-2120C, WBR-2122C (trade name, manufactured by Taisei Fine Chemical Co., Ltd.), and the like.

The cationic olefin resin includes olefin such as ethylene and propylene in the structural skeleton, and a known one can be appropriately selected and used. In addition, the cationic olefin resin may be in an emulsion state dispersed in a solvent including water, an organic solvent, and the like. As the cationic olefin resin, a commercially available product can be used, and examples thereof include ARROWBASE CB-1200, CD-1200 (trade name, manufactured by Unitika Ltd.), and the like.

As the cationic allylamine resin, a known one can be appropriately selected and used. Examples of the cationic allylamine include a polyallylamine hydrochloride, a polyallylamine amide sulfate, an allylamine hydrochloride/diallylamine hydrochloride copolymer, an allylamine acetate/diallylamine acetate copolymer, an allylamine acetate/diallylamine acetate copolymer, an allylamine hydrochloride/dimethylallylamine hydrochloride copolymer, an allylamine/dimethylallylamine copolymer, a polydiallylamine hydrochloride, a polymethyl diallylamine hydrochloride, a polymethyl diallylamine amidosulfate, a polymethyl diallylamine acetate, a polydiallyl dimethylammonium chloride, a diallylamine acetate/sulfur dioxide copolymer, a diallylmethylethyl ammonium ethylsulfide/sulfur dioxide copolymer, a methyldiallylamine chloride/sulfur dioxide copolymer, a diallyldimethyl ammonium chloride/sulfur dioxide copolymer, a diallyldimethyl ammonium chloride/acrylamide copolymer, and the like. As such a cationic allylamine resin, a commercially available product can be used, and examples thereof include PAA-HCL-01, PAA-HCL-03, PAA-HCL-05, PAA-HCL-3L, PAA-HCL-10L, PAA-H-HCL, PAA-SA, PAA-01, PAA-03, PAA-05, PAA-08, PAA-15, PAA-15C, PAA-25, PAA-H-10C, PAA-D11-HCL, PAA-D41-HCL, PAA-D19-HCL, PAS-21CL, PAS-M-1L, PAS-M-1, PAS-22SA, PAS-M-1A, PAS-H-1L, PAS-H-5L, PAS-H-10L, PAS-92, PAS-92A, PAS-J-81L, PAS-J-81 (trade name, manufactured by Nittobo Medical Co., Ltd.), Hymo Neo-600, Hymoloc Q-101, Q-311, Q-501, Hymax SC-505, SC-505 (trade name, manufactured by Hymo Corporation), and the like.

Examples of the cationic surfactant include primary, secondary, and tertiary amine salt type compounds, an alkylamine salt, a dialkylamine salt, an aliphatic amine salt, a benzalkonium salt, a quaternary ammonium salt, a quaternary alkyl ammonium salt, an alkylpyridinium salt, a sulfonium salt, a phosphonium salt, an onium salt, an imidazolinium salt, and the like. Specific examples of the cationic surfactant include a chloride such as laurylamine, a coconut amine, a rosin amine, and the like, an acetate and the like, a lauryl trimethyl ammonium chloride, a cetyl trimethyl ammonium chloride, a benzyl tributyl ammonium chloride, a benzalkonium chloride, a dimethyletyl lauryl ammonium ethyl sulfate, a dimethylethyl octyl ammonium ethyl sulfate, a trimethyl lauryl ammonium chloride, a cetyl pyridinium chloride, a cetyl pyridinium bromide, a dihydroxy ethyl laurylamine, a decyl dimethyl benzyl ammonium chloride, a dodecyl dimethyl benzyl ammonium chloride, a tetradecyl dimethyl ammonium chloride, a hexadecyl dimethyl ammonium chloride, an octadecyl dimethyl ammonium chloride, and the like.

A content of the cationic compound may be equal to or more than 0.1% by mass and equal to or less than 25% by mass, equal to or more than 0.2% by mass and equal to or less than 20% by mass, and equal to or more than 0.3% by mass and equal to or less than 10% by mass, with respect to a total mass of the processing liquid. In addition, concentration of the aggregating agent may be equal to or more than 0.03 mol/kg in 1 kg of the processing liquid. In addition, the concentration of the aggregating agent may be equal to or more than 0.1 mol/kg and equal to or more than 1.5 mol/kg, and equal to or more than 0.2 mol/kg and equal to or less than 0.9 mol/kg, in 1 kg of the processing liquid.

### 3.2. Water

The processing liquid used in this embodiment preferably has water as a main solvent. The water is a component that evaporates and scatters by drying after the processing liquid is attached onto a recording medium. Since the same water as the water exemplified in the above-described ink can be used as the water, the example is not repeated. A content of the water included in the processing liquid can be equal to or more than 50% by mass, preferably equal to or more than 60% by mass, more preferably equal to or more than 70% by mass, and further more preferably equal to or more than 80% by mass, with respect to the total mass of the processing liquid.

### 3.3. Water-Soluble Organic Solvent

The processing liquid used in this embodiment may be added with a water-soluble organic solvent. By adding the water-soluble organic solvent, it is possible to improve wettability of the processing liquid with respect to a recording medium. As the water-soluble organic solvent, the same as the organic solvent exemplified in the above-described ink composition can be used. A content of the water-soluble organic solvent is not particularly limited, but can be equal to or more than 1% by mass and equal to or less than 40% by mass, with respect to a total mass of the processing liquid.

### 3.4. Surfactant

The processing liquid used in this embodiment may be added with a surfactant. By adding the surfactant, it is possible to decrease the surface tension of the processing liquid and to improve wettability of the recording medium. Among the surfactants, an acetylene glycol-based surfactant, a silicone-based surfactant, and a fluorine-based surfactant can be preferably used, for example. As a specific example of the surfactant, the same as the surfactant exemplified in the above-described ink composition can be used. A content of the surfactant is not particularly limited, but can be equal to or more than 0.1% by mass and equal to or less than 1.5% by mass, with respect to the total mass of the processing liquid.

### 3.5. Resin Particle

The processing liquid used in this embodiment can be mixed with a resin particle such as a resin emulsion for the purpose of improving the friction fastness and suppressing fluffing of the cloth. In addition, as the resin particle is included, color developing properties are improved. As such a resin particle, the same resin as the resin particle usable in the ink can be used, and a commercially available product can be used. In a case of the urethane resin, examples thereof include Superflex 500, 6E-2000, E-2500, E-4000, R-5000 (trade name, manufactured by DKS Co., Ltd.), Adecabon Titer HUX-822, 830 (trade name, manufactured by ADEKA Corporation), and the like. Examples of the vinyl acetate resin include Vinyblan 1245L, 2680, 2682, 2684 (trade name, manufactured by Nissan Chemical Industry Co., Ltd.), and the like. Examples of the acrylic resin include Bonkote AN-402, R-3310, R-3360 (trade name, manufactured by DIC Corporation), and the like. Examples of the styrene acrylic resin include Mowinyl 966A (trade name, manufactured by Nippon Synthetic Chemical Industry Co., Ltd.) and the like.

A lower limit of a content of the resin particle in the processing liquid is preferably equal to or more than 1% by mass, more preferably equal to or more than 3% by mass, and further more preferably equal to or more than 5% by mass, with respect to a total mass of the processing liquid composition. In addition, a lower limit of the content of the resin particle is preferably equal to or less than 12% by mass, more preferably equal to or less than 10% by mass, and further more preferably equal to or less than 8% by mass, with respect to the total mass of the processing liquid composition. As the content of the resin particle in the processing liquid is within the range, it is possible to further improve color developing properties and friction fastness and to suppress fluffing of the cloth.

In this embodiment, the resin particle is preferably a non-ionic or cationic resin particle. In a case where the resin particle is a non-ionic resin particle, a printed matter having excellent color developing properties is obtained, particularly in printing with respect to a cotton cloth. In addition, in a case where the resin particle is a cationic resin particle, a printed matter having excellent color developing properties is obtained, particularly in printing with respect to a polyester cloth.

### 3.6. Other Components

The processing liquid used in this embodiment may be added with a pH adjusting agent, a preservative, an anti-mold agent, a rust preventive agent, a chelating agent, and the like. As the other components, the same as those exemplified in the above-described ink composition can be used.

### 3.7. Method of Preparing Processing Liquid

The processing liquid used in this embodiment can be prepared by dispersing/mixing each of the components by an appropriate method. After sufficiently stirring each of the components, filtration is performed in order to remove a coarse particle and a foreign matter that cause closing and thereby a targeted processing liquid can be obtained. 3.8. Physical Properties of Processing Liquid

In a case where the processing liquid used in this embodiment is ejected from an ink jet recording head, the surface tension at 20°C is preferably equal to or more than 20 mN/m and equal to 40 mN/m, and more preferably 20 mN/m and equal to or less than 35 mN/m. The surface tension can be measured by checking the surface tension when a platinum plate is wet with an ink in an environment of 20°C, using an automatic surface tension meter CBVP-Z (trade name, manufactured by Kyowa Interface Science Co., Ltd.), for example.

In addition, from the same viewpoint, a viscosity at 20°C of the processing liquid used in this embodiment is preferably equal to or more than 3 mPa·s and equal to or less than 10 mPa·s, and more preferably equal to or more than 3 mPa·s and equal to or less than 8 mPa·s. The viscosity can be measured by measuring a viscosity in an environment of 20°C using a viscoelastic tester MCR-300 (trade name, manufactured by Pysica Corporation), for example.

The processing liquid used in this embodiment is particularly excellent in reactivity with the sulfonate-based anionic surfactant in the ink composition due to inclusion of a cationic compound. Therefore, a pigment easily stays on the cloth surface, and favorable color developing properties can be obtained.

### 4. Cloth

The ink jet recording method according to this embodiment is performed on the cloth. The material constituting the cloth is not particularly limited, and examples thereof include a natural fiber such as cotton, hemp, wool, and silk, a synthetic fiber such as polypropylene, polyester, acetate, triacetate, polyamide, and polyurethane, a biodegradable fiber such as polylactic acid. The material constituting the cloth may be a blended fiber of these fibers. The cloth may be obtained by making the above-exemplified fibers into any form of a woven fabric, a knit fabric, and a non-woven fabric. In addition, the texture of the cloth used in this embodiment is not particularly limited, and is equal to or more than 1.0 oz (28.35g) and equal to or less than 10.0 oz (283.50g), preferably equal to or more than 2.0 oz (56.70g) and equal to or less than 9.0 oz (255.15g), more preferably equal to or more than 3.0 oz (85.05g) and equal to or less than 8.0 oz (226.80g), and further more preferably equal to or more than 4.0 oz (113.40g) and equal to or less than 7.0 oz (198.45g). If the texture of the cloth is in such a range, it is possible to perform favorable recording. In addition, the inkjet recording method according to this embodiment is applicable to a plurality of kinds of cloths having different textures and it is possible to perform favorable recording.

In this embodiment, the cloth can be a polyester cloth made of polyester or polyester blended yarn. Examples of such a cloth include a polyester cloth, a polyester blended cloth, and the like. Examples of the polyester blended cloth include a cloth in which polyester is blended by equal to or more than 20% by mass, preferably by equal to or more than 50% by mass, and more preferably by equal to or more than 70% by mass, and other blended fibers are not limited and examples thereof include cotton. Such a polyester cloth is excellent from a viewpoint that moisture such as sweat is easily dried, but on the other hand, the ink does not infiltrate therein. With respect to this, in this embodiment, as the ink includes a sulfonate-based anionic surfactant, it is possible to obtain excellent color developing properties even in the polyester cloth into which the ink easily sinks downward.

In addition, in this embodiment, the cloth can be a cotton cloth. The cotton cloth has a lot of hydrophilic groups in the fiber, and since the fiber is dense, the ink infiltrates into the cloth and easily spreads. In this embodiment, as the ink includes a sulfonate-based anionic surfactant, spreading of the ink is suppressed and infiltration of the ink inside the cloth is suppressed. Therefore, the ink stays on an upper layer in the cloth and has excellent color developing properties.

### 5. Ink Jet Recording Method

Subsequently, the inkjet recording method according to this embodiment will be described by each process. The inkjet recording method according to this embodiment is a method in which ink jet printing is performed by using the processing liquid composition and the pigment printing inkjet ink composition. In addition, the inkjet recording method according to this embodiment is a method in which the pigment printing inkjet ink composition is ejected from an inkjet head and attached to a region in which the processing liquid composition is attached.

### 5.1. Processing Liquid Composition Attaching Step

In the ink jet recording method according to this embodiment, in order to improve color development of a printed matter, it is preferable to have a processing liquid composition attaching step of attaching the processing liquid composition onto the cloth before attaching the ink onto the cloth.

An attachment amount of the processing liquid composition is preferably equal to or more than 0.02 g/cm² and equal to or less than 0.5 g/cm², and more preferably equal to or more than 0.02 g/cm² and equal to or less than 0.24 g/cm², for example. As the attachment amount of the processing liquid composition is within the range, it is easy to uniformly apply the processing liquid composition to the cloth, and it is possible to suppress aggregation irregularity of an image and to enhance color development.

In addition, in the processing liquid composition attaching step, in a case where the processing liquid composition includes a polyvalent metal salt, an attachment amount of the polyvalent metal salt included in the processing liquid composition attached onto the cloth is preferably equal to or more than 1.6 µmol/cm² and equal to or less than 6 µmol/cm², and more preferably equal to or more than 2 µmol/cm² and equal to or less than 5 µmol/cm². As the attachment amount of the polyvalent metal salt is equal to or more than 1.6 µmol/cm², color developing properties of the recorded image become favorable. In addition, as the attachment amount of the polyvalent metal salt is equal to or less than 6 µmol/cm², color developing properties of the recorded image become favorable.

Examples of the method of attaching the processing liquid composition onto the cloth include a method of immersing a cloth in a processing liquid composition (immersion application), a method of applying a processing liquid composition with a roll cutter and the like (roller application), a method of emitting a processing liquid composition using a spray device and the like (spray application), a method of emitting a processing liquid composition by an ink jet method (ink jet application), and the like, and any of the method can be used. Here, in a case of performing ink jet printing using the printer 1 shown in Figure, it is preferable that the processing liquid composition be attached onto the cloth M by ink jet application from the ink jet head 2. If the processing liquid composition attaching step is performed by ink jet application, it is possible to further uniformly attach the processing liquid composition onto the cloth M.

The inkjet recording method according to this embodiment may include processing liquid composition drying step of drying the processing liquid composition attached onto the cloth after the processing liquid composition attaching step. The drying of the processing liquid composition may be performed by natural drying, and from a viewpoint of improving a drying speed, drying is preferably performed in accordance with heating. In a case where the drying step of the processing liquid composition is performed in accordance with heating, the heating method is not particularly limited, and examples thereof include a heat press method, an atmospheric steam method, a high-pressure steam method, a thermofix method, and the like. In addition, examples of the heat source of heating include infrared rays (lamp).

### 5.2. Ink Composition Attaching Step

An ink composition attaching step is a step in which the pigment printing ink jet ink composition according to this embodiment is ejected from an ink jet nozzle and attached to a region in which the processing liquid composition is attached by the processing liquid composition attaching step. By the ink composition attaching step, an image having excellent color developing properties is obtained.

When the pigment printing ink jet ink composition is attached onto the cloth, the ink may be attached such that at least a portion of the region in which a processing liquid is attached overlaps. Specifically, the ink is preferably attached such that 50% or more of the region in which at least the processing liquid is attached overlaps, more preferably attached such that 60% or more of the region overlaps, and further more preferably attached such that 70% or more of the region overlaps. By attaching the ink in such a manner, it is possible to provide a recording method having excellent color developing properties.

In the ink composition attaching step, a lower limit of an attachment amount of the pigment printing ink composition to the cloth is preferably equal to or more than 10 mg/inch² (1.55mg/cm²), more preferably equal to or more than 50 mg/inch² (7.75mg/cm²), and further more preferably equal to or more than 80 mg/inch² (12.4mg/cm²). An upper limit thereof is preferably equal to or less than 200 mg/inch² (31mg/cm²), more preferably equal to or less than 150 mg/inch² (23.25mg/cm²), and further more preferably equal to or less than 100 mg/inch² (15.5mg/cm²). As the attachment amount of the ink composition is within the range, an image excellent in color developing properties is easily prepared, and the drying speed also becomes favorable.

### 5.3. Heating Step

The inkjet recording method according to this embodiment preferably includes a step of heating the cloth during the ink composition attaching step. If the cloth is heated during the ink composition attaching step, a temperature of the ink is increased, the viscosity and the surface tension are decreased, and thereby the ink easily uniformly spreads to the cloth and easily permeates. In addition, in this embodiment, since permeation of the ink is controlled by the sulfonate-based anionic surfactant included in the ink composition, the ink appropriately uniformly spreads on the cloth surface. With this, the ink is easily fixed to the cloth, and the obtained recorded matter has improved color developing properties and leveling properties as well as excellent friction fastness. In addition, by attaching the ink composition onto the heated cloth, it is possible to improve drying properties of the ink, to shorten the drying time, and to suppress damage to the cloth.

Examples of the heating method of heating the ink composition imparted to the cloth include a heating mechanism 6 shown in Figure. Examples of the heating mechanism include a heat press method, an atmospheric pressure steam method, a high-pressure steam method, a hot air drying method, a thermofix method, and the like, in addition to the mechanism.

In the heating step, a surface temperature of the heated cloth is equal to or more than 35°C and equal to or less than 65°C. As the surface temperature of the cloth surface is within the range, damage to the ink jet head or the cloth can be decreased, and the ink easily uniformly spreads onto and easily permeates the cloth. The heating temperature in this heating step is a temperature of the surface of the heated cloth, for example, and can be measured by using a non-contact thermometer (trade name "IT2-80", manufactured by Keyence Corporation), for example. The surface temperature of the heated cloth surface is preferably equal to or more than 40°C, and more preferably equal to or more than 45°C. In addition, an upper limit value of the surface temperature is preferably equal to or more than 60°C, and more preferably equal to or more than 55°C.

In addition, a heating time is not particularly limited as long as the cloth surface is within the temperature range. For example, the heating time can be equal to or more than 5 seconds and equal to or less than 1 minute, and preferably equal to or more than 10 seconds and equal to or less than 30 seconds. As the heating time is within the range, it is possible to sufficiently heat the cloth while reducing damage to the ink jet head or the cloth.

In addition to this heating step, as described using Figure, there may be included a step of providing a second heating mechanism on a downstream side of the cloth M in a transporting direction and heating or drying the cloth M after the ink composition attaching step. In this case, the second heating mechanism is provided on a downstream side of the cloth M in a transporting direction from the heating mechanism 6 of Figure. With this, it is possible to improve drying properties of liquid droplets of the ink attached onto the cloth M. As the second heating mechanism, for example, any mechanism described in the heating mechanism 6 such as a dryer can be used.

The heating temperature in this case is not limited thereto, and preferably equal to or more than 100°C and equal to or less than 200°C. In a case where the cloth is cotton, the heating temperature is preferably equal to or more than 120°C and equal to or less than 160°C, and in a case where the cloth is polyester or polyester-blended yarn, the heating temperature is more preferably equal to or more than 100°C and equal to or less than 140°C. As the heating temperature is within the range, it is possible to reduce damage to the cloth or to promote filmization of the resin particle included in the ink composition. In addition, the heating time is not limited thereto, but can be equal to or more than 30 seconds and equal to or less than 20 minutes, preferably equal to or more than 2 minutes and equal to or less than 7 minutes, and more preferably equal to or more than 3 minutes and equal to or less than 5 minutes. As the heating time is within the range, it is possible to sufficiently dry the ink while reducing damage to the cloth.

### 5.4. Operatio n/Effect

As described above, according to the ink jet recording method according to this embodiment, by using the pigment printing ink jet ink composition according to this embodiment including a sulfonate-based anionic surfactant, color developing properties becomes favorable, and by setting a content of the sulfonate-based anionic surfactant and a content of glycerine which is a moisturizing agent to be within an appropriate range, it is possible to make print reliability and storage stability excellent. In addition, in a case where a urethane resin is used in the ink as a resin particle, it is possible to improve friction fastness.

### 6. Examples and Comparative Examples

Hereinafter, the invention will be further specifically described using examples, but the invention is not limited to the examples.

### 6.1. Preparation of Ink Composition

### 6.1.1. Preparation of Pigment Dispersing Liquid

A pigment, a polymer dispersing agent, a sulfonate-based anionic surfactant, and water were put in a container so as to obtain a composition described in Tables 1-1 and 1-2, pre-mixed, and then circulating-dispersed using a disc type beads mill (manufactured by Shinmaru Enterprises Corporation, KDL type, media: zirconia ball having a diameter of 0.3 mm) for 8 hours to obtain a pigment dispersing liquid.

### 6.1.2. Preparation of Ink Composition

Each pigment dispersing liquid obtained by preparation of the pigment dispersing liquid was added with each component in the composition of Tables 1-1 and 1-2, put in a container, mixed and stirred for 2 hours using a magnetic stirrer, and then sufficiently mixed by performing dispersion treatment using a beads mill filled with zirconia beads having a diameter of 0.3 mm. While stirring for 1 hour, filtration was performed by using a 5-µm membrane filter made of PTFE to obtain each pigment printing ink jet ink composition. The numerical values in Tables 1-1 and 1-2 represent % by mass, and pure water (ion exchange water) was added such that mass of each ink composition becomes 100% by mass.

**Table 1-1**

| | | Examples | | | | | | | | | | | | | | |
|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 |
| Pigment | Black pigment (carbon black) | 4 | | | | 4 | 4 | 4 | 4 | 4 | 4 | 4 | 4 | 4 | 6 | 4 |
| | Cyan pigment (PB 15:3) | | 4 | | | | | | | | | | | | | |
| | Magenta pigment (PR122) | | | 4 | | | | | | | | | | | | |
| | Yellow pigment (PY74) | | | | 4 | | | | | | | | | | | |
| Polymer dispersing agent | Styrene-acrylic polymer dispersing agent | | | | | | | | | | | | | | | |
| Sulfonate-based anionic surfactant | Dioctyl sulfosuccinate sodium salt | 1 | 1 | 1 | 1 | | | | | 1 | 1 | 1 | 0.5 | 2 | 1 | 1 |
| | Dioctyl sulfosuccinate potassium salt | | | | | 1 | | | | | | | | | | |
| | Di-2-ethylhexyl sodium sulfosuccinate | | | | | | 1 | | | | | | | | | |
| | Didodecyl sulfosuccinate sodium salt | | | | | | | 1 | | | | | | | | |
| | Dihexadecyl sulfosuccinate sodium salt | | | | | | | | 1 | | | | | | | |
| | Dihexyl sulfosuccinate sodium salt | | | | | | | | | | | | | | | |
| | Dibenzyl sulfosuccinate sodium salt | | | | | | | | | | | | | | | |
| | Ditricosyl sulfosuccinate sodium salt | | | | | | | | | | | | | | | |
| | Dodecylbenzene sulfonic acid sodium salt | | | | | | | | | | | | | | | |
| Sulfuric acid ester salt-based surfactant | 2-ethylhexyl sulfonic acid ester sodium | | | | | | | | | | | | | | | |
| Carbonate-based anionic surfactant | Sodium lauryl glycol acetate | | | | | | | | | | | | | | | |
| Resin particle | Urethane resin emulsion 1 | 5 | 5 | 5 | 5 | 5 | 5 | 5 | 5 | 5 | 5 | 5 | 5 | 5 | 5 | 5 |
| | Urethane resin emulsion 2 | | | | | | | | | | | | | | | |
| Moisturizing agent | Glycerine (297°C) | 15 | 15 | 15 | 15 | 15 | 15 | 15 | 15 | 10 | 6 | 5 | 15 | 15 | 15 | |
| | Triethylene glycol (287°C) | 5 | 5 | 5 | 5 | 5 | 5 | 5 | 5 | 5 | 5 | 5 | 5 | 5 | 5 | |
| | 2-pyrrolidone (245°C) | 3 | 3 | 3 | 3 | 3 | 3 | 3 | 3 | 3 | 3 | 3 | 3 | 3 | 3 | |
| | Diethylene glycol-m-butyl ether (230°C) | 1 | 1 | 1 | 1 | 1 | 1 | 1 | 1 | 1 | 1 | 1 | 1 | 1 | 1 | |
| Alkali agent | Triethanolamine | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| Surfactant | Orfin E1010 | 1 | 1 | 1 | 1 | 1 | 1 | 1 | 1 | 1 | 1 | 1 | 1 | 1 | 1 | 1 |
| Preservative | Proxel XL2 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 |
| Water | Super pure water | residue | residue | residue | residue | residue | residue | residue | residue | residue | residue | residue | residue | residue | residue | residue |
| Cloth | | cotton | cotton | cotton | cotton | cotton | cotton | cotton | cotton | cotton | cotton | cotton | cotton | cotton | cotton | cotton |
| Processing liquid composition | | present | present | present | present | present | present | present | present | present | present | present | present | present | present | present |
| Color developing properties | | A | A | A | A | A | A | A | A | A | A | A | B | A | S | A |
| Print Reliability (intermittent ejection stability) | | S | S | S | S | S | S | S | A | S | A | B | S | B | A | C |
| Storage stability | | A | A | A | A | A | A | A | A | A | A | A | B | A | A | A |
| Friction fastness | | A | A | A | A | A | A | A | A | A | A | A | A | A | A | A |

**Table 1-2**

| | | Examples | | | | | | | | | | | | | | Comparative Example | | | |
|---|---|---|---|---|---|---|---|---|---|---|---|---|---|---|---|---|---|---|---|
| | | 16 | 17 | 18 | 19 | 20 | 21 | 22 | 23 | 24 | 25 | 26 | 27 | 28 | 29 | 1 | 2 | 3 | 4 |
| Pigment | Black pigment (carbon black) | 4 | 4 | 4 | 4 | 4 | 4 | 4 | 4 | 4 | 4 | 4 | 4 | 4 | 4 | 4 | 4 | 4 | 4 |
| | Cyan pigment (PB 15:3) | | | | | | | | | | | | | | | | | | |
| | Magenta pigment (PR122) | | | | | | | | | | | | | | | | | | |
| | Yellow pigment (PY74) | | | | | | | | | | | | | | | | | | |
| Polymer dispersing agent | Styrene-acrylic polymer dispersing agent | | | | | | | | | | | | | | | 1 | 1 | | |
| Sulfonate-based anionic surfactant | Dioctyl sulfosuccinate sodium salt | 1 | 1 | 1 | 1 | 1 | 1 | 1 | 0.1 | 0.2 | 0.9 | 1.1 | 1 | 1 | 1 | | | | |
| | Dioctyl sulfosuccinate potassium salt | | | | | | | | | | | | | | | | | | |
| | Di-2-ethylhexyl sodium sulfosuccinate | | | | | | | | | | | | | | | | | | |
| | Didodecyl sulfosuccinate sodium salt | | | | | | | | | | | | | | | | | | |
| | Dihexadecyl sulfosuccinate sodium salt | | | | | | | | | | | | | | | | | | |
| | Dihexyl sulfosuccinate sodium salt | | | | 1 | | | | | | | | | | | | | | |
| | Dibenzyl sulfosuccinate sodium salt | | | | | 1 | | | | | | | | | | | | | |
| | Ditricosyl sulfosuccinate sodium salt | | | | | | 1 | | | | | | | | | | | | |
| | Dodecylbenzene sulfonic acid sodium salt | | | | | | | 1 | | | | | | | | | | | |
| Sulfuric acid ester salt-based surfactant | 2-ethylhexyl sulfonic acid ester sodium | | | | | | | | | | | | | | | | | 1 | |
| Carbonate-based anionic surfactant | Sodium lauryl glycol acetate | | | | | | | | | | | | | | | | | | 1 |
| Resin particle | Urethane resin emulsion 1 | | 5 | 5 | 5 | 5 | 5 | 5 | 5 | 5 | 5 | 5 | 5 | 5 | 5 | 5 | | 5 | 5 |
| | Urethane resin emulsion 2 | 5 | | | | | | | | | | | | | | | 5 | | |
| Moisturizing agent | Glycerine (297°C) | 15 | 15 | 15 | 15 | 15 | 15 | 15 | 15 | 15 | 15 | 15 | | 30 | 15 | 15 | 15 | 15 | 15 |
| | Triethylene glycol (287°C) | 5 | 5 | 5 | 5 | 5 | 5 | 5 | 5 | 5 | 5 | 5 | | 5 | 5 | 5 | 5 | 5 | 5 |
| | 2-pyrrolidone (245°C) | 3 | 3 | 3 | 3 | 3 | 3 | 3 | 3 | 3 | 3 | 3 | 3 | 3 | | 3 | 3 | 3 | 3 |
| | Diethylene glycol-m-butyl ether (230°C) | 1 | 1 | 1 | 1 | 1 | 1 | 1 | 1 | 1 | 1 | 1 | 1 | 1 | 1 | 1 | 1 | 1 | 1 |
| Alkali agent | Triethanolamine | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| Surfactant | Orfin E1010 | 1 | 1 | 1 | 1 | 1 | 1 | 1 | 1 | 1 | 1 | 1 | 1 | 1 | 1 | 1 | 1 | 1 | 1 |
| Preservative | Proxel XL2 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 |
| Water | Super pure water | residue | residue | residue | residue | residue | residue | residue | residue | residue | residue | residue | residue | residue | residue | residue | residue | residue | residue |
| Cloth | | cotton | cotton | PES | cotton | cotton | cotton | cotton | cotton | cotton | cotton | cotton | cotton | cotton | cotton | cotton | cotton | cotton | cotton |
| Processing liquid composition | | present | - | present | present | present | present | present | present | present | present | present | present | present | present | present | present | present | present |
| Color developing properties | | A | B | A | B | B | B | B | B | B | A | A | A | A | A | C | C | C | C |
| Print Reliability (intermittent ejection stability) | | S | S | S | A | A | A | A | A | S | S | A | B | B | A | B | B | B | C |
| Storage stability | | A | A | A | A | B | B | B | B | B | A | A | A | A | A | B | B | B | B |
| Friction fastness | | B | A | A | A | A | A | A | A | A | A | A | A | A | A | A | A | A | A |

In Tables 1-1 and 1-2, details of the components described other than compound names are as follows. In the parenthesis of the moisturizing agent in Tables 1-1 and 1-2, a temperature at a normal boiling point is indicated.

### Pigment

· Black pigment: Carbon black
· Cyan pigment: C.I. pigment blue 15:3
· Magenta pigment: C.I. pigment red 122
· Yellow pigment: C.I. pigment yellow 74

### Polymer Dispersing Agent

· Styrene-acrylic acid copolymer, polymer dispersing agent: Joncryl 611 (trade name, manufactured by BASF Japan Corporation)

### Resin Particle

· Urethane resin emulsion 1: Takelac WS-5100 (trade name, manufactured by Mitsui Chemicals & SKC Polyurethanes Inc., polycarbonate-based urethane resin including a cross-linking group, the numerical value in the table is a solid content of the urethane resin.)
· Urethane resin emulsion 2: Hydran WLS-213 (trade name, manufactured by DIC Corporation, polycarbonate-based urethane resin not including a cross-linking group, the numerical value in the table is a solid content of the urethane resin.)

### Surfactant

· Orfin E1010 (trade name, manufactured by Nippon Chemical Industries, acetylene glycol-based surfactant)

### Preservative

· Proxel XL2 (trade name, manufactured by Avecia Corporation)

### 6.2. Preparation of Printed Matter

### 6.2.1. Preparation of Processing Liquid Composition

16.0% by mass of calcium nitrate tetrahydrate (Ca: 17%), 2.7% by mass of fixing resin (trade name "Mowinyl 966A", manufactured by Nippon Synthetic Chemical Industry Co., Ltd.) (solid content), and 0.2% by mass of surfactant (trade name "Safinol 486", manufactured by Nissan Chemical Industry Co., Ltd.) were put in a container, ion exchange water was added such that the total mass is 100% by mass, and the resultant product was mixed and stirred by a magnetic stirrer for 2 hours to be sufficiently mixed. While stirring for 1 hour, filtration was performed by using a 5-µm membrane filter made of PTFE to obtain a processing liquid composition.

### 6.2.2. Preparation of Printed Matter

### Pre-treatment

In Tables 1-1 and 1-2, regarding the example in which processing liquid composition is described as "present", the following treatment was performed. A processing liquid composition was sufficiently included in a sponge roller, the roller was vertically and horizontally rotated 3 to 4 times with respect to the cloth (cotton cloth (Printstar heavyweight (white) 5.6 oz) described in Tables 1-1 and 1-2 or a polyester cloth (glimmer ACTIVE WEAR 3.5 oz Interlock dry T-shirt 001 white), and the processing liquid composition was applied as uniformly as possible. An application amount of the processing liquid composition was approximately 20 g per an area of A4 size. The cloth to which the processing liquid composition was applied was subjected to heat treatment at 165°C for 45 seconds by using a heat press and dried. In Tables 1-1 and 1-2, the cotton cloth was described as "cotton", and the polyester cloth was described as "PES".

### Preparation of Printed Matter

Regarding the case where pre-treatment was performed using the processing liquid composition, to a region of the dried cloth to which the processing liquid composition was applied, and regarding the case where pre-treatment was not performed, to the cloth described in Tables 1-1 and 1-2 (cotton cloth (Printstar heavyweight (white) 5.6 oz) or the polyester cloth (glimmer ACTIVE WEAR 3.5 oz Interlock dry T-shirt 001 white), printing was performed with the ink composition described in each example at a resolution of 1440 dpi × 1440 dpi and in an application amount of 200 mg/inch² (31mg/cm²), using a printer (trade name "SC-F200") manufactured by Seiko Epson Corporation. After printing, heat treatment was performed at 165°C for 5 minutes in a conveyer oven (hot air drying method) and fixation of the printed matter was performed.

### matter was performed.

### 6.3. Evaluation Test

Regarding each ink, evaluation of print reliability, storage stability, and color developing properties was carried out.

### 6.3.1. Evaluation of Color Developing Properties

An OD value of the printed matter obtained in each example was measured using a colorimeter (trade name "Gretag Macbeth Spectrolino", manufactured by X-RITE Corporation), and color developing properties were evaluated based on the obtained OD value, according to the following evaluation criteria.

### Evaluation Criteria

S: OD value is equal to or more than 1.45.
A: OD value is equal to or more than 1.40 and less than 1.45.
B: OD value is equal to or more than 1.35 and less than 1.40.
C: OD value is less than 1.35.

### 6.3.2. Evaluation of Print Reliability (Intermittent Ejection Stability)

The ink composition was filled such that the ink composition was ejected from a plurality of nozzle lines of a printer (trade name "SC-F200" manufactured by Seiko Epson Corporation), while checking that the ink composition was ejected from all of the nozzles, after capping the recording head and stopping thereof at 25°C for 1 week, the nozzles were examined. Among the total of 360 nozzles, the number of non-ejecting nozzles and the number of ejecting nozzles were checked, and print reliability was evaluated according to the following evaluation criteria.

### Evaluation Criteria

### S: The number of non-ejecting nozzles was 3 or less.

A: The number of non-ejecting nozzles was equal to or more than 4 and equal to or less than 8.
B: The number of non-ejecting nozzles was equal to or more than 9 and equal to or less than 12.
C: The number of non-ejecting nozzles was equal to or more than 13, and in ejection checking before stopping, normal ejection was possible.

### 6.3.3. Evaluation of Storage Stability

The ink composition was housed in an ink housing made of a polyethylene film of an inkjet printer (manufactured by Seiko Epson Corporation, trade name "PX-G930"), acceleration test was performed at 60°C for 7 days, and then a viscosity of the ink composition was measured at 20°C, and a thickening factor (ink viscosity at 20°C after acceleration test/ink viscosity at 20°C before acceleration test × 100) was acquired. Thereby, storage stability was evaluated according to the following evaluation criteria.

### Evaluation Criteria

A: Less than 1%.
B: Equal to or more than 1% and less than 3%.

### 6.3.4. Evaluation of Friction Fastness

Dry friction fastness of the printed matter obtained in each example was evaluated by using a rubbing tester AB-301 of Tester Sangyo Co., Ltd. based on JIS L0849 friction tester II type. In the friction fastness test, a load was 200 g, reciprocally rubbed times were 100, and a JIS color fastness testing white cloth (No. 3-1, Shirting No. 3, based on JIS L 0803) was used as a friction cloth. Determination of the class was visually performed using a gray scale, and friction fastness of the printed matter was evaluated according to the following evaluation criteria.

### Evaluation Criteria

A: Dry_4th grade or more
B: Dry_3th grade or 3/4th grade

### 6.4. Evaluation Result

The result of the evaluation test is shown in Tables 1-1 and 1-2.

In any of examples, a pigment, a resin particle, a sulfonate-based anionic surfactant, and water were included, and color developing properties were excellent. In addition, by using a sulfonate-based anionic surfactant as a pigment dispersing agent, dispersibility of the pigment was excellent, and thus print reliability and storage stability were also excellent. In addition, with respect to any of the cotton cloth and the polyester cloth, the same result was obtained. On the other hand, in a comparative example using a dispersing agent other than the sulfonate-based anionic surfactant as a pigment dispersing agent, not only color developing properties deteriorated, but also the ink viscosity was increased and print reliability and storage stability deteriorated.

Specifically, in Examples 1 to 4, in a case of using any pigments, color developing properties were excellent, and print reliability and storage stability were also excellent. In addition, in Examples 1, 5 to 8, and 19 to 22, in a case of using different sulfonate-based anionic surfactants, in any examples, color developing properties were excellent, and print reliability and storage stability were also excellent. In particular, if a sulfosuccinate having an alkyl group having 6 to 22 carbon atoms is used as the sulfonate-based anionic surfactant, there was a tendency that color developing properties, print reliability, and storage stability were high.

In Examples 1, 9 to 11, and 27 to 29, if a content of glycerine was decreased, there was a tendency that print reliability deteriorated. In addition, compared with Examples 15 and 27, in the pigment printing ink, a moisturizing agent was preferably included in order to ensure print reliability by suppressing clogging due to a resin, and, in particular, it was possible to make print reliability favorable by using glycerine or triethylene glycol which is a high boiling point organic solvent. On the other hand, since glycerine or triethylene glycol had a high viscosity, if glycerine or triethylene glycol was included, there was a tendency that the ink viscosity was increased. However, since a sulfonate-based anionic surfactant was used as a pigment dispersing agent in the ink of the examples, it was possible to have a viscosity appropriate for ink jet recording while including an appropriate amount of glycerine in order to ensure print reliability.

In Examples 1, 12, 13, and 23 to 26, those having a high content of the sulfonate-based anionic surfactant were found to have excellent color developing properties and storage stability, but if the content of the sulfonate-based anionic surfactant was too high, print reliability somewhat deteriorated.

In Examples 1 and 14, if a content of the pigment was high, color developing properties were excellent, but print reliability somewhat deteriorated.

In Examples 1 and 16, those using a urethane resin emulsion including a cross-linking group as a urethane resin emulsion had high friction fastness.

In Examples 1 and 17, those subjected to pre-treatment using a processing liquid composition had high color developing properties.

In Examples 1 and 18, the same result as that of the cotton cloth was obtained in the polyester cloth.

Hereinabove, as the ink of the examples include a pigment, a resin particle, a sulfonate-based anionic surfactant, and water, color developing properties were favorable, and as the type of the sulfonate-based anionic surfactant, or the content of the pigment, the sulfonate-based anionic surfactant, and glycerine which is a moisturizing agent were within an appropriate range, print reliability and storage stability were also excellent.

The invention is not limited to the embodiments, and various modifications are possible. For example, the invention includes substantially the same configurations (for example, configurations of which functions, methods, and the results are the same, or configurations of the object and the effect are the same) as the configurations described in the embodiment. In addition, the invention includes configurations in which non-essential parts of the configuration described in the embodiment are substituted. In addition, the invention includes configurations that exhibit the same operations and effects of the configuration described in the embodiment, or configurations with which the same object can be achieved. In addition, the invention includes configurations obtained by adding a known technology to the configuration described in the embodiment.

## Claims

1. A pigment printing ink jet ink composition comprising:
a pigment;
a resin particle;
a sulfonate-based anionic surfactant; and
water;
wherein the resin particle is a polycarbonate-based urethane resin particle, and a content of the resin particle is equal to or more than 2.5% by mass.

2. The pigment printing ink jet ink composition according to Claim 1, further comprising:
a moisturizing agent.

3. The pigment printing inkjet ink composition according to Claim 2, further comprising:
an organic solvent having a normal boiling point of 280°C or more, as the moisturizing agent.

4. The pigment printing ink jet ink composition according to Claim 3,
wherein the organic solvent having a normal boiling point of 280°C or more is included by 15% by mass or more with respect to a total mass of the ink composition.

5. The pigment printing ink jet ink composition according to any one of Claims 2 to 4, further comprising:
a nitrogen-containing solvent, as the moisturizing agent.

6. The pigment printing ink jet ink composition according to any one of Claims 1 to 5,
wherein the sulfonate-based anionic surfactant is a sulfosuccinate.

7. The pigment printing ink jet ink composition according to Claim 4,
wherein the sulfonate-based anionic surfactant is a sulfosuccinate including an alkyl group having 6 to 22 carbon atoms.

8. The pigment printing ink jet ink composition according to any one of Claims 1 to 7,
wherein a content of the sulfonate-based anionic surfactant is equal to or more than 0.2% by mass and equal to or less than 1% by mass with respect to a total mass of the ink composition.

9. The pigment printing ink jet ink composition according to any one of Claims 1 to 8,
wherein the pigment is a pigment dispersed in the sulfonate-based anionic surfactant.

10. The pigment printing ink jet ink composition according to any one of Claims 1 to 9,
wherein the resin includes a cross-linking group; and preferably wherein the cross-linking group includes an isocyanate group or a silanol group.

11. The pigment printing ink jet ink composition according to any one of Claims 1 to 10,
wherein the ink composition is used by being attached to a cloth, and
wherein the cloth is cotton or polyester.

12. An ink set for pigment printing, comprising:
a processing liquid composition that includes a cationic compound and water; and
the pigment printing ink jet ink composition according to any one of Claims 1 to 11.

13. The ink set for pigment printing according to Claim 12,
wherein the cationic compound is a polyvalent metal salt.

14. The ink set for pigment printing according to either of Claims 12 and 13,
wherein the processing liquid composition further includes a resin particle.

15. A method of performing ink jet printing by using the processing liquid composition according to any one of Claims 12 to 14 and the pigment printing ink jet ink composition according to any one of Claims 1 to 11, the method comprising:
ejecting the pigment printing ink jet ink composition from an ink jet head to a region to which the processing liquid composition is attached, so as to attach the composition to the region.

## Patentansprüche

1. Pigmentdruck-Tintenstrahltintenzusammensetzung, umfassend:
ein Pigment;
ein Harzpartikel;
ein auf Sulfonat basierendes, anionisches Tensid; und
Wasser;
wobei das Harzpartikel ein auf Polycarbonat basierendes Urethanharzpartikel ist und ein Gehalt des Harzpartikels gleich oder größer als 2,5 Masseprozent ist.

2. Pigmentdruck-Tintenstrahltintenzusammensetzung nach Anspruch 1, weiter umfassend:
ein Befeuchtungsmittel.

3. Pigmentdruck-Tintenstrahltintenzusammensetzung nach Anspruch 2, weiter umfassend:
ein organisches Lösemittel mit einem normalen Siedepunkt von 280°C oder mehr als das Befeuchtungsmittel.

4. Pigmentdruck-Tintenstrahltintenzusammensetzung nach Anspruch 3,
wobei das organische Lösemittel mit einem normalen Siedepunkt von 280°C oder mehr mit 15 Masseprozent oder mehr in Bezug auf eine Gesamtmasse der Tintenzusammensetzung enthalten ist.

5. Pigmentdruck-Tintenstrahltintenzusammensetzung nach einem der Ansprüche 2 bis 4, weiter umfassend:
ein stickstoffhaltiges Lösemittel als das Befeuchtungsmittel.

6. Pigmentdruck-Tintenstrahltintenzusammensetzung nach einem der Ansprüche 1 bis 5,
wobei das auf Sulfonat basierende, anionische Tensid Sulfosuccinat ist.

7. Pigmentdruck-Tintenstrahltintenzusammensetzung nach Anspruch 4,
wobei das auf Sulfonat basierende, anionische Tensid ein Sulfosuccinat ist, das eine Alkylgruppe mit 6 bis 22 Kohlenstoffatomen enthält.

8. Pigmentdruck-Tintenstrahltintenzusammensetzung nach einem der Ansprüche 1 bis 7,
wobei ein Gehalt des auf Sulfonat basierenden, anionischen Tensids gleich oder größer als 0,2 Masseprozent und gleich oder kleiner als 1 Masseprozent in Bezug auf eine Gesamtmasse der Tintenzusammensetzung ist.

9. Pigmentdruck-Tintenstrahltintenzusammensetzung nach einem der Ansprüche 1 bis 8,
wobei das Pigment ein Pigment ist, das in dem auf Sulfonat basierenden, anionischen Tensid dispergiert ist.

10. Pigmentdruck-Tintenstrahltintenzusammensetzung nach einem der Ansprüche 1 bis 9,
wobei das Harz eine Vernetzungsgruppe enthält; und wobei vorzugsweise die Vernetzungsgruppe eine Isocyanatgruppe oder eine Silanolgruppe enthält.

11. Pigmentdruck-Tintenstrahltintenzusammensetzung nach einem der Ansprüche 1 bis 10,
wobei die Tintenzusammensetzung verwendet wird, indem sie auf einen Stoff aufgebracht wird, und
wobei der Stoff Baumwolle oder Polyester ist.

12. Tintensatz für einen Pigmentdruck, umfassend:
eine Bearbeitungsflüssigkeitszusammensetzung, die eine kationische Verbindung und Wasser enthält; und
die Pigmentdruck-Tintenstrahltintenzusammensetzung nach einem der Ansprüche 1 bis 11.

13. Tintensatz für einen Pigmentdruck nach Anspruch 12,
wobei die kationische Verbindung ein mehrwertiges Metallsalz ist.

14. Tintensatz für einen Pigmentdruck nach einem der Ansprüche 12 und 13,
wobei die Bearbeitungsflüssigkeitszusammensetzung weiter ein Harzpartikel enthält.

15. Verfahren zum Durchführen eines Tintenstrahldrucks unter Verwendung der Bearbeitungsflüssigkeitszusammensetzung nach einem der Ansprüche 12 bis 14 und der Pigmentdruck-Tintenstrahltintenzusammensetzung nach einem der Ansprüche 1 bis 11, wobei das Verfahren umfasst:
Ausstoßen der Pigmentdruck-Tintenstrahltintenzusammensetzung aus einem Tintenstrahlkopf auf einen Bereich, auf den die Bearbeitungsflüssigkeitszusammensetzung aufgebracht ist, um so die Zusammensetzung auf dem Bereich aufzubringen.

## Revendications

1. Composition d'encre pour jet d'encre d'impression de pigment, comprenant :
un pigment ;
une particule de résine ;
un surfactant anionique à base de sulfonate ; et
de l'eau ;
dans laquelle la particule de résine est une particule de résine d'uréthane à base de polycarbonate, et une teneur de la particule de résine est égale ou supérieure à 2,5% en masse.

2. Composition d'encre pour jet d'encre d'impression de pigment selon la revendication 1, comprenant en outre :
un agent d'humidification.

3. Composition d'encre pour jet d'encre d'impression de pigment selon la revendication 2, comprenant en outre :
un solvant organique présentant un point d'ébullition normal de 280°C ou plus, en tant qu'agent d'humidification.

4. Composition d'encre pour jet d'encre d'impression de pigment selon la revendication 3,
dans laquelle le solvant organique présentant un point d'ébullition normal de 280°C ou plus est inclus à raison de 15% en masse ou plus par rapport à une masse totale de la composition d'encre.

5. Composition d'encre pour jet d'encre d'impression de pigment selon l'une quelconque des revendications 2 à 4, comprenant en outre :
un solvant contenant de l'azote, en tant qu'agent d'humidification.

6. Composition d'encre pour jet d'encre d'impression de pigment selon l'une quelconque des revendications 1 à 5, dans laquelle le surfactant anionique à base de sulfonate est un sulfosuccinate.

7. Composition d'encre pour jet d'encre d'impression de pigment selon la revendication 4,
dans laquelle le surfactant anionique à base de sulfonate est un sulfosuccinate incluant un groupe alkyle présentant de 6 à 22 atomes de carbone.

8. Composition d'encre pour jet d'encre d'impression de pigment selon l'une quelconque des revendications 1 à 7,
dans laquelle une teneur du surfactant anionique à base de sulfonate est égale ou supérieure à 0,2% en masse et égale ou inférieure à 1% en masse par rapport à une masse totale de la composition d'encre.

9. Composition d'encre pour jet d'encre d'impression de pigment selon l'une quelconque des revendications 1 à 8,
dans laquelle le pigment est un pigment dispersé dans le surfactant anionique à base de sulfonate.

10. Composition d'encre pour jet d'encre d'impression de pigment selon l'une quelconque des revendications 1 à 9,
dans laquelle la résine inclut un groupe de réticulation ; et dans laquelle le groupe de réticulation inclut de préférence un groupe isocyanate ou un groupe silanol.

11. Composition d'encre pour jet d'encre d'impression de pigment selon l'une quelconque des revendications 1 à 10,
dans laquelle la composition d'encre est utilisée en étant fixée à un tissu, et
dans laquelle le tissu est du coton ou du polyester.

12. Jeu d'encres pour impression de pigment, comprenant :
une composition de liquide de traitement incluant un composé cationique et de l'eau ; et
la composition d'encre pour jet d'encre d'impression de pigment selon l'une quelconque des revendications 1 à 11.

13. Jeu d'encres pour impression de pigment selon la revendication 12,
dans lequel le composé cationique est un sel métallique polyvalent.

14. Jeu d'encres pour impression de pigment selon l'une des revendications 12 et 13,
dans lequel la composition de liquide de traitement inclut en outre une particule de résine.

15. Procédé d'impression à jet d'encre à l'aide de la composition de liquide de traitement selon l'une quelconque des revendications 12 à 14 et de la composition d'encre pour jet d'encre d'impression de pigment selon l'une quelconque des revendications 1 à 11, le procédé comprenant :
l'éjection de la composition d'encre pour jet d'encre d'impression de pigment à partir d'une tête de jet d'encre vers une région à laquelle la composition de liquide de traitement est fixée, de manière à fixer la composition à la région.
